(19) **Europäisches Patentamt / European Patent Office / Office européen des brevets**

(11) **EP 4 773 544 A1**

(12) **EUROPEAN PATENT APPLICATION**
published in accordance with Art. 153(4) EPC

(43) Date of publication:
08.07.2026 Bulletin 2026/28

(21) Application number: 24866888.1

(22) Date of filing: 17.05.2024

(51) International Patent Classification (IPC):
*H04L 9/32* (2006.01)

(52) Cooperative Patent Classification (CPC):
H04L 63/08; H04L 9/32; H04L 9/40; H04L 63/06

(86) International application number:
PCT/CN2024/093967

(87) International publication number:
WO 2025/060465 (27.03.2025 Gazette 2025/13)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 21.09.2023 CN 202311230568

(71) Applicant: HUAWEI TECHNOLOGIES CO., LTD.
Shenzhen 518129 (CN)

(72) Inventors:
• FEI, Shufan
Xi'an, Shaanxi 710071 (CN)

• YAN, Zheng
Xi'an, Shaanxi 710071 (CN)
• WANG, Dongliang
Xi'an, Shaanxi 710071 (CN)
• WANG, Haiguang
Shenzhen, Guangdong 518129 (CN)
• LI, Tieyan
Shenzhen, Guangdong 518129 (CN)

(74) Representative: Körber, Martin Hans
Mitscherlich PartmbB
Karlstraße 7
80333 München (DE)

(54) **DIGITAL CERTIFICATE MANAGEMENT METHOD AND APPARATUS, COMPUTER DEVICE, AND STORAGE MEDIUM**

(57) Embodiments of this application disclose a digital certificate management method and apparatus, a computer device, and a storage medium, and belong to the field of network security technologies. In this application, a BCF node may send certificate information of a first NF node to a plurality of target CA nodes in different network domains in a blockchain system based on CA node indication information in a certificate issuance request of the first NF node, the plurality of target CA nodes jointly provide certificate signatures for the certificate information of the first NF node, and then the BCF node sends an authorized digital certificate to the first NF node based on the signatures, thereby implementing decentralized cross-domain certificate issuance.

FIG. 6

**Description**

This application claims priority to Chinese Patent Application No. 202311230568.8, filed on September 21, 2023 and entitled "DIGITAL CERTIFICATE MANAGEMENT METHOD AND APPARATUS, COMPUTER DEVICE, AND STORAGE MEDIUM", which is incorporated herein by reference in its entirety.

**TECHNICAL FIELD**

This application relates to the field of network security technologies, and in particular, to a digital certificate management method and apparatus, a computer device, and a storage medium.

**BACKGROUND**

In a service-based architecture (service-based architecture, SBA) of a 5th generation core (5th generation core, 5GC) network, different network function (network function, NF) nodes may communicate with each other by using a hypertext transfer protocol (hypertext transfer protocol, HTTP). In this case, communication between the different NF nodes may be protected by using a security mechanism like a transport layer security (transport layer security, TLS) protocol or an open authorization (open authorization, OAuth) protocol. However, use of a digital certificate and a public key infrastructure (public key infrastructure, PKI) of the NF node is indispensable for a process of protecting the communication between the NF nodes by using the security mechanism.

Currently, with features such as decentralization, distributed consensus, tamper resistance, and programmability, a blockchain technology can be used to establish a decentralized trust relationship between entities that do not fully trust each other. Therefore, the blockchain technology may be used to build a decentralized digital certificate management platform, to replace a certificate authority center serving as a trusted third party. Based on this, a blockchain-based digital certificate management method urgently needs to be provided, to manage the digital certificate of the NF node in the 5GC.

**SUMMARY**

This application provides a digital certificate management method and apparatus, a computer device, and a storage medium, to implement decentralized cross-network domain certificate issuance.

To achieve the foregoing objective, the following technical solutions are used in this application.

According to a first aspect, a digital certificate management method is provided, applied to a blockchain function (blockchain function, BCF) node. The method includes: receiving a certificate issuance request of a first network function (network function, NF) node, where the certificate issuance request includes an identifier and a public key of the first NF node and certificate authority (certificate authority, CA) node indication information, the CA node indication information indicates a plurality of target CA nodes, the plurality of target CA nodes are nodes in a blockchain system, and at least two of the plurality of target CA nodes belong to different network domains; sending certificate information of the first NF node to the plurality of target CA nodes, where the certificate information includes the identifier and the public key of the first NF node and identifiers of the plurality of target CA nodes; receiving certificate signatures provided by the plurality of target CA nodes, where the certificate signature is a signature of the certificate information; and sending an authorized digital certificate to the first NF node based on the certificate information and the certificate signatures provided by the plurality of target CA nodes.

Different network domains may be networks provided by different operators, for example, 5GCs provided by different operators. In addition, different network domains may alternatively be different types of networks provided by a same operator.

In this application, the BCF node may send the certificate information of the first NF node to the plurality of target CA nodes in different network domains in the blockchain system based on the CA node indication information in the certificate issuance request of the first NF node, the plurality of target CA nodes jointly provide the certificate signatures for the certificate information of the first NF node, and then the BCF node sends the authorized digital certificate to the first NF node based on the certificate signatures provided by the plurality of target CA nodes, thereby implementing decentralized cross-domain certificate issuance.

Optionally, an implementation process of receiving the certificate signatures provided by the plurality of target CA nodes may be: receiving the certificate signatures of the plurality of target CA nodes, where the certificate signatures of the target CA nodes are obtained by signing the certificate information by using private keys of the target CA nodes.

In this application, the plurality of target CA nodes may sign the certificate information by using the private keys of the plurality of target CA nodes, to obtain the certificate signatures of the plurality of target CA nodes, and feed back the certificate signatures to the BCF node. In this way, the plurality of target CA nodes may generate the certificate signatures for the certificate information in parallel, and certificate signing efficiency is high.

Optionally, sending the authorized digital certificate to the first NF node based on the certificate information and the certificate signatures provided by the plurality of target CA nodes includes: generating an aggregate certificate signature based on the certificate signatures of the plurality of target CA nodes; generating the authorized digital certificate based on the aggregate certificate signature and the certificate information, where the authorized digital certificate includes the certificate information and the aggregate certificate signature; and sending the authorized digital certificate to the first NF node.

In this application, after receiving the certificate signatures of the plurality of target CA nodes, the BCF node may aggregate the certificate signatures of the plurality of target CA nodes, to obtain the aggregate certificate signature. In this way, the aggregate certificate signature is used as a certificate signature of the authorized digital certificate, so that a data transmission amount during transmission of the authorized digital certificate can be reduced, a size of a storage space that needs to be occupied for storing the authorized digital certificate can be further reduced.

Optionally, an implementation process of receiving the certificate signatures provided by the plurality of target CA nodes may include: receiving an aggregate certificate signature provided by a first CA node in the plurality of target CA nodes, where the aggregate certificate signature is generated by the first CA node based on the certificate signatures of the plurality of target CA nodes.

Optionally, an implementation process of sending the authorized digital certificate to the first NF node based on the certificate information and the certificate signatures provided by the plurality of target CA nodes may include: generating the authorized digital certificate based on the aggregate certificate signature and the certificate information, where the authorized digital certificate includes the certificate information and the aggregate certificate signature; and sending the authorized digital certificate to the first NF node.

In this application, alternatively, a CA node like the first CA node in the plurality of target CA nodes may aggregate the certificate signatures of the plurality of target CA nodes, to obtain the aggregate certificate signature.

Optionally, the BCF node may further send first identity verification information to the plurality of target CA nodes, where the first identity verification information includes the certificate issuance request and a first signature, the first signature is obtained by signing a hash value of the certificate issuance request by using a private key of the first NF node, and the first identity verification information is used to verify whether a node to which the certificate information belongs is a node that sends the certificate issuance request.

In this application, the first signature in the first identity verification information is obtained by signing the hash value of the certificate issuance request of the first NF node by using the private key of the first NF node. Therefore, the target CA node may verify, based on the first signature in the first identity verification information, whether a subject that sends the certificate issuance request is consistent with a subject in the certificate information, to avoid behavior of requesting to issue the certificate by a non-certificate subject, thereby implementing transparent certificate issuance.

Optionally, an implementation process in which the BCF node sends the certificate information of the first NF node to the plurality of target CA nodes may be: The BCF node sends a certificate issuance transaction to the plurality of target CA nodes, where the certificate issuance transaction includes the certificate information of the first NF node. The certificate issuance transaction is used to initiate, to the plurality of target CA nodes, a transaction for issuing the digital certificate to the first NF node. The transaction may be data or a message to be processed by using a smart contract in the blockchain system.

Optionally, the certificate issuance transaction may further include the first identity verification information.

In this application, the certificate issuance transaction is initiated, and the certificate is issued by using the smart contract in the blockchain system, thereby improving certificate reliability.

Optionally, after receiving the certificate signatures provided by the plurality of target CA nodes, the method further includes: obtaining time validity key information of the plurality of target CA nodes, where the time validity key information includes the identifiers and time validity keys of the target CA nodes and expiration time of the time validity keys, and private keys of the target CA nodes include the time validity keys of the target CA nodes; verifying the time validity key information of the plurality of target CA nodes; and if verification on the time validity key information of the plurality of target CA nodes succeeds, performing a step of sending the authorized digital certificate to the first NF node.

In this application, the time validity key information of the target CA node includes the identifier and the time validity key of the target CA node and the expiration time of the time validity key, and the private key of the target CA node includes the time validity key. In this way, whether the private key of the target CA node expires can be verified by verifying the time validity key information of the target CA node, to determine whether the target CA node is valid. This can avoid signing of an invalid CA node on the certificate information, thereby improving certificate signing reliability.

Optionally, after sending the authorized digital certificate to the first NF node, the method further includes: receiving a certificate release request of the first NF node; sending the authorized digital certificate to a consensus node in the blockchain system based on the certificate release request; receiving a storage address that is of the authorized digital certificate and that is sent by the consensus node; and sending certificate release response to the first NF node, where the certificate release response includes the storage address of the authorized digital certificate.

In this application, after releasing the digital certificate, the consensus node may return the storage address of the authorized digital certificate to the first NF node. In this way, when subsequently querying for the authorized digital certificate of the first NF node, another NF node may directly read the authorized digital certificate based on the storage address without traversing the entire blockchain, thereby improving certificate query efficiency.

Optionally, the method further includes: sending second identity verification information to the consensus node, where the second identity verification information includes the certificate release request and a second signature, the second signature is obtained by signing a hash value of the certificate release request by using the private key of the first NF node, and the second identity verification information is used to verify whether a node to which the authorized digital certificate belongs is a node that sends the certificate release request.

In this application, the consensus node in the blockchain system may verify, based on the second identity verification information, whether a certificate subject is consistent with a subject that releases the certificate, to avoid behavior of releasing the certificate by a non-certificate subject, thereby implementing transparent certificate release.

Optionally, an implementation process of sending the authorized digital certificate to the consensus node in the blockchain system may be: sending a certificate release transaction to the consensus node, where the certificate release transaction includes the authorized digital certificate and is used to initiate, to the consensus node, a transaction for releasing the authorized digital certificate. Correspondingly, receiving the storage address that is of the authorized digital certificate and that is sent by the consensus node may include receiving a certificate release transaction receipt sent by the consensus node, where the certificate release transaction receipt includes the storage address of the authorized digital certificate.

Optionally, the certificate release transaction may further include the second identity verification information.

According to a second aspect, a digital certificate management method is provided, applied to a first CA node in a plurality of target CA nodes in a blockchain system, where at least two of the plurality of target CA nodes belong to different network domains. The method includes: receiving certificate information of a first NF node from a BCF node, where the certificate information includes an identifier and a public key of the first NF node and identifiers of the plurality of target CA nodes; generating a first certificate signature based on a private key of the first CA node and the certificate information; and sending the first certificate signature to the BCF node, where the BCF node is configured to send an authorized digital certificate to the first NF node based on the first certificate signature and the certificate information, where the authorized digital certificate includes certificate signatures provided by the plurality of target CA nodes.

In this application, the first CA node is any CA node in the target CA node. The plurality of target CA nodes in different network domains in the blockchain system may jointly provide the certificate signatures for the certificate information of the first NF node. In this way, the BCF node may send, to the first NF node, the authorized digital certificate including the certificate signatures provided by the plurality of target CA nodes, thereby implementing decentralized cross-domain certificate issuance.

Optionally, the method further includes: receiving first identity verification information from the BCF node, where the first identity verification information includes a certificate issuance request of the first NF node and a first signature, and the first signature is obtained by signing a hash value of the certificate issuance request by using a private key of the first NF node; and before generating the first certificate signature based on the private key of the first CA node and the certificate information, the method further includes: verifying the first signature based on the public key of the first NF node and the certificate issuance request; and if verification on the first signature succeeds, performing a step of generating the first certificate signature based on the private key of the first CA node and the certificate information.

In this application, the first signature in the first identity verification information is obtained by signing the hash value of the certificate issuance request of the first NF node by using the private key of the first NF node. Therefore, the target CA node may verify, based on the first signature in the first identity verification information, whether a subject that sends the certificate issuance request is consistent with a subject in the certificate information, to avoid behavior of requesting to issue the certificate by a non-certificate subject, thereby implementing transparent certificate issuance.

Optionally, an implementation process of receiving the certificate information of the first NF node from the BCF node may be: receiving a certificate issuance transaction from the BCF node, where the certificate issuance transaction includes the certificate information of the first NF node. The certificate issuance transaction is used to initiate, to the plurality of target CA nodes, a transaction for issuing the digital certificate to the first NF node. The transaction may be data or a message to be processed by using a smart contract in the blockchain system.

Optionally, the certificate issuance transaction may further include the first identity verification information.

Optionally, an implementation process of generating the first certificate signature based on the private key of the first CA node and the certificate information may include: signing the certificate information by using the private key of the first CA node, to obtain the first certificate signature.

In this application, the plurality of target CA nodes may sign the certificate information by using private keys of the plurality of target CA nodes, to obtain the certificate signatures of the plurality of target CA nodes, and feed back the certificate signatures to the BCF node. In this way, the plurality of target CA nodes may generate the certificate signatures for the certificate information in parallel, and certificate signing efficiency is high.

Optionally, an implementation process of generating the first certificate signature based on the private key of the first CA node and the certificate information may include: obtaining a certificate signature of another CA node in the plurality of target CA nodes from the blockchain system, where the certificate signature of the another CA node is obtained by signing, by the another CA node, the certificate information by using a private key of the another CA node; signing the certificate information by using the private key of the first CA node, to obtain a certificate signature of the first CA node; and generating the first certificate signature based on the certificate signature of the first CA node and the certificate signature of the another CA node.

In this application, the first CA node may aggregate the certificate signatures of the plurality of target CA nodes, to obtain an aggregate certificate signature, and feed back the aggregate certificate signature to the BCF node.

Optionally, before receiving the certificate information of the first NF node from the BCF node, the method further includes: sending a CA registration request to a key generation center (key generation center, KGC), where the CA registration request includes an identifier of the first CA node, and the KGC is deployed in a trustworthy cloud server; and receiving key information that is of the first CA node and that is sent by the KGC, where the key information of the first CA node is generated based on the identifier of the first CA node, and the key information of the first CA node includes information about the private key of the first CA node.

In this application, the KGC may be deployed in the TCS, to implement strong protection on a master private key. Based on this, registration of the CA node is implemented via the KGC, to issue a key to the CA node, thereby improving security.

Optionally, an implementation process of sending the CA registration request to the KGC may include: obtaining a first random number; generating a public key of the first CA node based on the first random number; and sending the CA registration request to the KGC, where the CA registration request further includes the public key of the first CA node.

Optionally, the key information of the first CA node includes a time validity key of the first CA node, and the time validity key is generated based on a public key and an identifier of the first CA node, expiration time of the time validity key, and a master private key of the KGC.

Optionally, the method further includes: generating the private key of the first CA node based on the time validity key and the first random number.

In this application, the private key of the CA node includes the time validity key issued by the KGC to the CA node, and the time validity key has the corresponding expiration time. In this way, a signature of the time validity key is controlled to flexibly revoke a malicious CA node, thereby improving the security.

Optionally, the key information of the first CA node includes a public key of the first CA node and first ciphertext, the public key of the first CA node is generated based on the identifier of the first CA node, the first ciphertext is obtained by encrypting the private key of the first CA node by using a channel encryption key between the KGC and the first CA node, and the private key of the first CA node is generated based on the public key of the first CA node and trapdoor information of the KGC.

Optionally, the method further includes: decrypting the first ciphertext based on a channel decryption key corresponding to the channel encryption key, to obtain the private key of the first CA node.

According to a third aspect, a digital certificate management method is provided, applied to a first NF node. The method further includes: sending a certificate issuance request to a BCF node, where the certificate issuance request includes an identifier and a public key of the first NF node and CA node indication information, the CA node indication information indicates a plurality of target CA nodes, the plurality of target CA nodes are nodes in a blockchain system, and at least two of the plurality of target CA nodes belong to different network domains; and receiving an authorized digital certificate sent by the BCF node, where the authorized digital certificate includes certificate signatures provided by the plurality of target CA nodes.

In this application, the first NF node may send the certificate issuance request to the BCF node, to obtain the certificate signatures jointly provided by the plurality of target CA nodes in different network domains in the blockchain system for certificate information of the first NF node, thereby implementing decentralized cross-domain certificate issuance.

Optionally, the certificate signatures provided by the plurality of target CA nodes are an aggregate certificate signature generated based on the certificate signatures of the plurality of target CA nodes. This can reduce a data transmission amount during transmission of the authorized digital certificate, and can further reduce a size of a storage space that needs to be occupied for storing the authorized digital certificate.

Optionally, the method further includes: sending a certificate release request to the BCF node; and receiving certificate release response returned by the BCF node for the certificate release request, where the certificate release response is response returned after a consensus node in the blockchain system releases the authorized digital certificate based on the certificate release request, and the certificate release response includes a storage address of the authorized digital certificate.

Optionally, the method further includes: sending the storage address of the authorized digital certificate to a second NF node in response to a certificate query request of the second NF node, where the second NF node is configured to: obtain the authorized digital certificate based on the storage address of the authorized digital certificate, and verify the authorized digital certificate.

In this application, after the first NF node requests to release the certificate, the BCF node may return the storage address of the authorized digital certificate to the first NF node after the certificate is successfully released. In this way, when subsequently querying for the authorized digital certificate of the first NF node, another NF node may directly read the authorized digital certificate based on the storage address without traversing the entire blockchain, thereby improving certificate query efficiency.

Optionally, when the certificate release request is sent to the BCF node, a second signature may be further sent to the BCF node, where the second signature is obtained by signing a hash value of the certificate release request by using a private key of the first NF node, and the second signature is used to verify validity of the certificate release request.

In this application, the first NF node may send the certificate release request and the corresponding second signature together to the BCF node. In this way, subsequently, the BCF node may send the second signature and the certificate release request to the consensus node in the blockchain system as the second identity verification information. Correspondingly, the consensus node in the blockchain system may verify, based on the second identity verification information, whether a certificate subject is consistent with a subject that releases the certificate, to avoid behavior of releasing the certificate by a non-certificate subject, thereby implementing transparent certificate release.

According to a fourth aspect, a digital certificate management apparatus is provided. The digital certificate management apparatus may include at least one module, and the at least one module is configured to perform the method according to any one of the first aspect, the second aspect, or the third aspect.

According to a fifth aspect, a computer device is provided. The computer device includes a processor, and the processor is configured to execute at least one program instruction or code stored in a memory, to implement the digital certificate management method according to the first aspect, the second aspect, or the third aspect.

According to a sixth aspect, a computer-readable storage medium is provided. The computer-readable storage medium stores instructions, and when the instructions are run on a computer device, the computer device is enabled to perform the digital certificate management method according to the first aspect, the second aspect, or the third aspect.

According to a seventh aspect, a computer program product including instructions is provided. When the computer program product runs on a computer device, the computer device is enabled to perform the digital certificate management method according to the first aspect, the second aspect, or the third aspect.

Technical effect obtained in the fourth aspect to the seventh aspect is similar to technical effect obtained through corresponding technical means in the first aspect, the second aspect, or the third aspect. Details are not described herein again.

In embodiments of this application, the BCF node may send the certificate information of the first NF node to the plurality of target CA nodes in different network domains in the blockchain system based on the CA node indication information in the certificate issuance request of the first NF node, the plurality of target CA nodes jointly provide the certificate signatures for the certificate information of the first NF node, and then the BCF node sends the authorized digital certificate to the first NF node based on the signatures, thereby implementing decentralized cross-domain certificate issuance.

**BRIEF DESCRIPTION OF DRAWINGS**

FIG. 1 is a diagram of an implementation environment of a digital certificate management method according to an embodiment of this application;
FIG. 2 is a diagram of a structure of a computer device according to an embodiment of this application;
FIG. 3 is a diagram of a CA node registration procedure according to an embodiment of this application;
FIG. 4 is a detailed example diagram of a CA node registration procedure according to an embodiment of this application;
FIG. 5 is a detailed example diagram of another CA node registration procedure according to an embodiment of this application;
FIG. 6 is a flowchart of a digital certificate management method according to an embodiment of this application;
FIG. 7 is a diagram of a format of a digital certificate according to an embodiment of this application;
FIG. 8A and FIG. 8B are a flowchart of issuing a digital certificate according to an embodiment of this application;
FIG. 9A and FIG. 9B are another flowchart of issuing a digital certificate according to an embodiment of this application;
FIG. 10 is a flowchart of releasing, retrieving, and verifying a digital certificate according to an embodiment of this application;
FIG. 11 is a diagram of a structure of a digital certificate management apparatus according to an embodiment of this application;

FIG. 12 is a diagram of a structure of another digital certificate management apparatus according to an embodiment of this application; and

FIG. 13 is a diagram of a structure of still another digital certificate management apparatus according to an embodiment of this application.

## DESCRIPTION OF EMBODIMENTS

To make objectives, technical solutions, and advantages of embodiments of this application clearer, the following further describes implementations of this application in detail with reference to accompanying drawings.

Before embodiments of this application are described in detail, an application scenario in embodiments of this application is first described.

Currently, thanks to development of technologies such as a software-defined network (software-defined network, SDN) and network functions virtualization (network functions virtualization, NFV), a 5GC uses an SBA. In the 5GC SBA, functions of conventional network elements may be defined as several NF nodes by using software, and the NF nodes belonging to a same network domain or different network domains may communicate with each other by using a hypertext transfer protocol (hypertext transfer protocol, HTTP). Different network domains may be networks maintained by different operators, for example, core networks maintained by different operators are different network domains. Alternatively, different network domains may be different types of networks maintained by a same operator.

Currently, communication between the NF nodes may be protected by using a security mechanism like a TLS protocol or an OAuth protocol. However, use of a digital certificate and a PKI of the NF is indispensable for a process of protecting the communication between the NF nodes by using the security mechanism.

However, in the conventional PKI, there are problems such as over-centralized trust and authorization for a certificate authority (Certificate Authority, CA) and non-transparent certificate management operations. With features such as decentralization, distributed consensus, tamper resistance, and programmability, the blockchain technology can be used to establish a decentralized trust relationship between entities that do not fully trust each other. Therefore, the blockchain technology may be used to build a decentralized digital certificate management platform, to replace the conventional CA serving as a trusted third party. However, a digital certificate management requirement in a cross-domain communication scenario of the NF node in the 5GC SBA is not considered in an existing blockchain-based digital certificate management solution. In view of this, embodiments of this application provide a digital certificate management method in which a plurality of CA nodes in different network domains in a blockchain system jointly provide certificate signatures for certificate information of a first NF node, to implement decentralized cross-domain certificate issuance, so as to meet the digital certificate management requirement in the cross-domain communication scenario.

The following describes an implementation environment of the digital certificate management method provided in embodiments of this application.

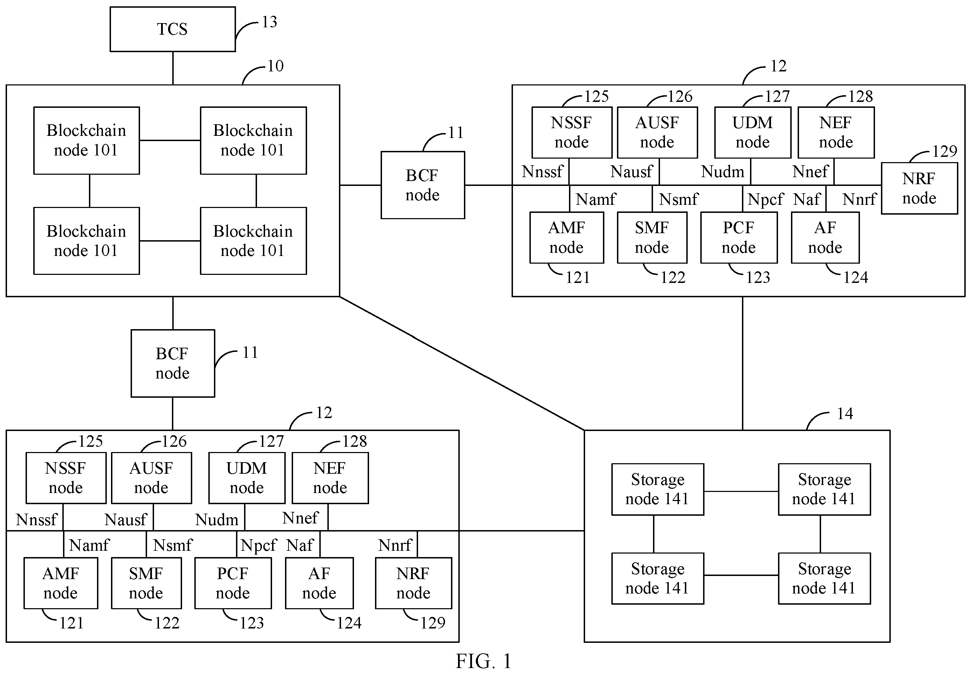

FIG. 1 is a diagram of the implementation environment of the digital certificate management method according to an embodiment of this application. As shown in FIG. 1, the implementation environment may include a blockchain system 10, a BCF node 11, and different types of 5GCs 12 provided by different operators or provided by a same operator.

For example, the 5GC 12 may include a plurality of NF nodes, the plurality of NF nodes may be deployed in at least one core network device, and each NF node is configured to provide at least one network function or service. For example, as shown in FIG. 1, the plurality of NF nodes may include an access and mobility management function (Access and Mobility Management Function, AMF) node 121, a session management function (Session Management Function, SMF) node 122, a policy control function (policy control function, PCF) node 123, an application function (application function, AF) node 124, a network slice selection function (network slice selection function, NSSF) node 125, an authentication server function (authentication server function, AUSF) node 126, a unified data management (unified data management, UDM) node 127, a network exposure function (network exposure function, NEF) node 128, a network repository function (network repository function, NRF) node 129, and the like.

It should be noted that, in embodiments of this application, the 5GC 12 may use an SBA, NF nodes in a same 5GC or different 5GCs may communicate with each other through a service-based interface (service-based interface, SBI), and introduction of the SBI enables the NF nodes to communicate with each other by using an HTTP protocol, so that authorized NF nodes can invoke each other. For example, Namf, Nsmf, and the like in FIG. 1 are SBIs of corresponding NF nodes. Each NF node may provide a service externally through a respective SBI, and allow another authorized NF node to access or invoke the service of the NF node. Based on this, communication between the NF nodes mainly includes an interaction process of request or response and subscription or notification between an NF service consumer and an NF service producer.

The blockchain system 10 may include a plurality of blockchain nodes 101, where the plurality of blockchain nodes 101 may be maintained by different operators, and are configured to execute a smart contract and maintain a blockchain ledger. In embodiments of this application, after any one of the plurality of blockchain nodes 101 completes a CA node registration procedure, the blockchain node 101 may be referred to as a CA node, to issue digital certificates to the NF nodes in different network domains. In addition, a part of the plurality of blockchain nodes 101 may alternatively serve as a consensus node to reach a consensus on a transaction.

The BCF node 11 is middleware connecting the 5GC 12 to the blockchain system 10. Each NF node in the 5GC 12 may communicate with the blockchain node 101 in the blockchain system 10 via the BCF node 11. For example, in embodiments of this application, the BCF node 11 may receive a certificate issuance request of an NF node in the 5GC 12, and construct certificate information for the NF node based on the certificate issuance request. Then, the certificate information is sent to a plurality of CA nodes in different network domains in the blockchain system 10, so that the plurality of CA nodes can jointly provide certificate signatures for the certificate information of the NF node. Subsequently, the BCF node may send an authorized digital certificate to the NF node based on the certificate information of the NF node constructed by the BCF node and the certificate signatures provided by the plurality of CA nodes, to implement decentralized cross-domain certificate issuance.

Optionally, the implementation environment may further include a trustworthy cloud server (trustworthy cloud server, TCS), and the TCS 13 is configured to implement registration of the CA node. For example, a trusted execution environment (trusted execution environment, TEE) may be deployed in the TCS 13. For example, a hardware security module (hardware security module, HSM) or a trusted platform module (trusted platform module, TPM) may be deployed. The HSM or the TPM may serve as a key generation center (key generation center, KGC), to issue a key to a blockchain node to be registered as a CA node in the blockchain system 10, to implement registration of the CA node.

Optionally, the implementation environment may further include an off-chain storage system 14. The off-chain storage system 14 may include a plurality of storage nodes 141, configured to store the authorized digital certificate issued by the CA node in the blockchain system 10 to the NF node, to provide a certificate retrieval service for the NF node.

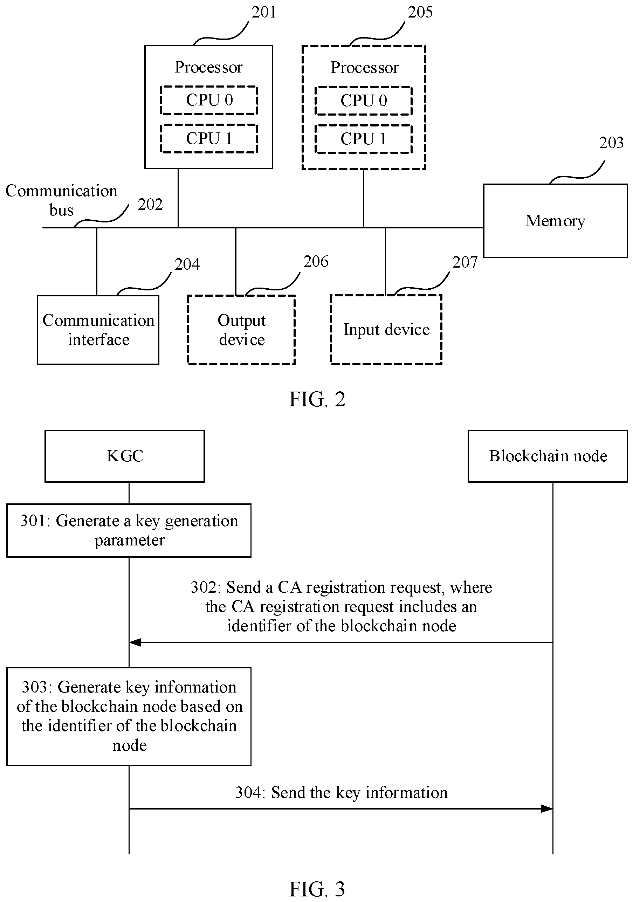

FIG. 2 is a diagram of a structure of a computer device according to an embodiment of this application. The BCF node, the node in the blockchain system, the NF node in the 5GC, or the TCS shown in FIG. 1 may be implemented by using the computer device shown in FIG. 2. As shown in FIG. 2, the computer device may include at least one processor 201, a communication bus 202, a memory 203, and at least one communication interface 204. It should be noted that the structure of the device shown in FIG. 2 does not constitute a limitation on the computer device, and the computer device may include more or fewer components than those shown in the figure, or a combination of some components, or a different component layout. This is not limited in embodiments of this application. The following describes the components of the computer device in detail with reference to FIG. 2.

The processor 201 is a control center of the computer device, and may be one processor, or may be a collective name of a plurality of processing components. For example, the processor 201 may be a general-purpose central processing unit (Central Processing Unit, CPU), an application-specific integrated circuit (application-specific integrated circuit, ASIC), or one or more integrated circuits configured to control program execution of the solutions in this application, for example, one or more microprocessors (digital signal processors, DSP) or one or more field programmable gate arrays (field programmable gate arrays, FPGA). The processor 201 may perform various functions of the computer device by running or executing a software program stored in the memory 203 and invoking data stored in the memory 203. For example, actions of nodes in embodiments shown in FIG. 3 to FIG. 10 may be performed by invoking the data in the memory by the processor of the computer device that implements the corresponding node.

In an embodiment, the processor 201 may include one or more CPUs, for example, a CPU 0 and a CPU 1 shown in FIG. 2.

In an embodiment, the computer device may include a plurality of processors, for example, the processor 201 and a processor 205 shown in FIG. 2. Each of the processors may be a single-core (single-CPU) processor, or may be a multi-core (multi-CPU) processor. The processor herein may be one or more devices, circuits, and/or processing cores configured to process data (for example, computer program instructions).

The communication bus 202 may include a path for transmitting information between the components. The communication bus 202 may be an industry standard architecture (industry standard architecture, ISA) bus, a peripheral component interconnect (peripheral component, PCI) bus, an extended industry standard architecture (extended industry standard architecture, EISA) bus, or the like. The bus may be classified into an address bus, a data bus, a control bus, and the like. For ease of indicate, the bus is indicated by using only one bold line in FIG. 2. However, it does not indicate that there is only one bus or only one type of bus.

The memory 203 may be a read-only memory (read-only memory, ROM) or another type of static storage device that can store static information and instructions, or a random access memory (random access memory, RAM) or another type of dynamic storage device that can store information and instructions. The memory 203 may alternatively be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of an instruction or a data structure and that can be accessed by a computer. However, the memory 203 is not limited thereto. The memory 203 may exist independently, and be connected to the processor 201 through the communication bus 202. The memory 203 may alternatively be integrated with the processor 201. The memory 203 is configured to store a software program for executing the solutions provided in embodiments of this application, and the processor 201 controls execution of the software program.

The communication interface 204 is configured to communicate with another device or a communication network, for example, an Ethernet, a RAN, or a wireless local area network (wireless local area network, WLAN). The communication interface 204 may include a receiving unit to implement a receiving function, and a sending unit to implement a sending function.

In an embodiment, the processor 201 may include the one or more CPUs, for example, the CPU 0 and the CPU 1 shown in FIG. 2.

In an embodiment, the computer device may include the plurality of processors, for example, the processor 201 and the processor 205 shown in FIG. 2. Each of the processors may be the single-core (single-CPU) processor, or may be the multi-core (multi-CPU) processor. The processor herein may be the one or more devices, circuits, and/or processing cores configured to process the data (for example, the computer program instructions).

In an embodiment, the computer device may further include an output device 206 and an input device 207. The output device 206 communicates with the processor 201, and may display information in a plurality of manners. For example, the output device 206 may be a liquid crystal display (liquid crystal display, LCD), a light-emitting diode (light-emitting diode, LED) display device, a cathode ray tube (cathode ray tube, CRT) display device, or a projector (projector). The input device 207 communicates with the processor 201, and may receive an input in a plurality of manners. For example, the input device 207 may be a mouse, a keyboard, a touchscreen device, a sensing device, or the like.

It can be learned from the descriptions in the implementation environment that, after completing the CA node registration procedure, the blockchain node in the blockchain system may serve as the CA node to issue the digital certificates to the NF nodes in different network domains, to implement cross-domain certificate issuance. Based on this, before the digital certificate management method provided in embodiments of this application is described, a process in which the blockchain node in the blockchain system is registered as the CA node is first described. The following describes the registration procedure by using any blockchain node in the blockchain system as an example. After the blockchain node completes the registration procedure shown in FIG. 3, the blockchain node may become the CA node. Refer to FIG. 3. The registration procedure includes the following steps.

**Step 301:** A KGC generates a key generation parameter.

In this embodiment of this application, the KGC may be deployed in a TCS. For example, the KGC may be an HSM or a TPM deployed in the trustworthy cloud server.

It should be noted that, in a process of performing registration on a blockchain node, the KGC needs to generate key information for the blockchain node, to issue a key. Based on this, the KGC may first perform initialization, to generate the key generation parameter used to generate the key information.

In this embodiment of this application, the KGC may generate the key information in two different implementations. In the two implementations, cryptographic algorithms used by the KGC are different, and correspondingly, manners of generating the key generation parameter during KGC initialization are also different.

In a first implementation, the KGC may obtain a preset security parameter, generate, based on the security parameter, additive cyclic groups $G_1$ and $G_2$ and a multiplicative cyclic group $G_T$ whose order is a prime number 9, obtain a generator $P$ of $G_2$, and generate a bilinear mapping $E$, where the bilinear mapping E is $G_1 \times G_2 \rightarrow G_T$. In addition, the KGC may further generate hash functions $H_1$, $H_2$, $H_3$, and $H_4$. The hash functions $H_1$ to $H_3$ may be used to map a bit string of any length to $G_1$, and $H_4$ may be used to map a bit string of any length to $G_2$. The KGC may further randomly select $s \in Z_q^*$ as a master private key of the KGC, where $Z_q^*$ is an integer multiplicative cyclic group whose order is $q$-1. Then, the KGC may calculate a master public key $P_{pub}$ of the KGC based on the master private key and the generator P, where $P_{pub} = sP$.

After obtaining the master private key, the KGC may store the master private key in a TEE, and disclose a first public parameter set, where the first public parameter set may include $G_1$, $G_2$, $E$, $q$, $P$, $P_{pub}$, $H_1$, $H_2$, $H_3$, $H_4$. The key generation parameter may include the master private key of the KGC, the generator $P$ in the first public parameter set, and the hash function $H_1$. In addition, disclosing the first public parameter set may be storing the first public parameter set in a blockchain, or storing the first public parameter set in a specified storage location, where the specified storage location is a location that is known to and can be accessed by each blockchain node in a blockchain system, each BCF node, and each NF node.

In a second implementation, the KGC may randomly select two large prime numbers $p$ and $q$, and store $p$ and $q$ as trapdoor information, to complete initialization. In this case, the trapdoor information is the key generation parameter.

After initialization is completed in any one of the foregoing manners, when subsequently receiving a CA registration request of any blockchain node, by using steps 302 to 304 below, the KGC may issue a key to the blockchain node by using the key generation parameter obtained through initialization, to implement registration of a CA node.

**Step 302:** A blockchain node sends a CA registration request to the KGC, where the CA registration request includes an identifier of the blockchain node.

When an operator needs to register, as a CA node, a blockchain node managed and maintained by the operator in the blockchain system, the operator may perform a CA registration operation on the blockchain node. The blockchain node may send a CA registration request to the KGC based on the CA registration operation.

When the implementation of KGC initialization is the first implementation in step 301, the blockchain node may obtain a first random number, generate a public key of the blockchain node based on the first random number, and then send the CA registration request to the KGC, where the CA registration request may include an identifier and the public key of the blockchain node.

It should be noted that the blockchain node may obtain the generator $P$ of $G_2$ included in the first public parameter set disclosed by the KGC, generate the public key of the blockchain node based on the first random number and a public key of the KGC, and then carry the identifier of the blockchain node and the public key in the CA registration request and send the CA registration request to the KGC.

The identifier of the blockchain node may be used to uniquely identify the blockchain node. The public key of the blockchain node may be equal to $xP$, where $x$ is the first random number.

When the implementation of KGC initialization is the second implementation in step 301, the blockchain node may directly send the CA registration request to the KGC, where the CA registration request includes the identifier of the blockchain node.

**Step 303:** The KGC generates key information of the blockchain node based on the identifier of the blockchain node.

After receiving the CA registration request sent by the blockchain node, the KGC may generate the corresponding key information for the blockchain node based on the CA registration request.

In the first implementation, the CA registration request includes the identifier and the public key of the blockchain node. In this case, the KGC may generate expiration time according to a preset time validity strategy, and then generate a time validity key of the blockchain node based on the public key and the identifier of the blockchain node, the expiration time, and the master private key of the KGC. The key information of the blockchain node includes the time validity key, and the time validity key is used to generate a private key of the blockchain node.

It should be noted that time validity strategies of CA nodes of different operators may be preconfigured in the KGC, and a time validity strategy may indicate valid duration after a blockchain node maintained by an operator is registered as a CA node. Based on this, the KGC may obtain the corresponding time validity strategy based on an operator to which the blockchain node belongs, and further generate the expiration time according to the time validity strategy. The expiration time is expiration time of the time validity key of the blockchain node, that is, time for which the blockchain node serves as the valid CA node may be indicated. In other words, the expiration time is expiration time of an identity of the blockchain node serving as the CA node.

After obtaining the expiration time, the KGC may first process the expiration time and the public key and the identifier of the blockchain node by using the hash function $H_1$ in the key generation parameter according to Formula 1, to obtain a time validity intermediate parameter, and then calculate the time validity key of the blockchain node according to Formula 2.

$$V = H_1(id_{CA}, pk, t) \qquad (1)$$

$$T = sV \qquad (2)$$

Herein, $V$ is the time validity intermediate parameter, $id_{CA}$ is the identifier of the blockchain node, $pk$ is the public key of the blockchain node, $t$ is the expiration time, $H_1$ is the hash function in the key generation parameter obtained during KGC initialization, $T$ is the time validity key, and $s$ is the master private key of the KGC.

It should be noted that, in this implementation, the KGC generates the time validity key based on the expiration time, to control time for maintaining a valid identity of the CA node. Subsequently, when the expiration time is exceeded, that is, after the valid identity of the CA node expires, if the KGC detects that the CA node has no malicious behavior, the KGC may continue to generate a time validity key for the CA node in the foregoing manner, to continue to maintain the valid identity of the CA node. If the KGC detects that the CA node has malicious behavior, the KGC may revoke the valid identity of the CA node by stopping issuing a time validity key to the CA node. It can be learned that the KGC may revoke a malicious CA node by using the time validity key.

In the second implementation, the CA registration request includes the identifier of the blockchain node. The KGC may generate the public key and the private key of the blockchain node based on the trapdoor information obtained during initialization and the identifier of the blockchain node. Then, the KGC may obtain the key information of the blockchain node based on the public key and the private key of the blockchain node.

For example, the KGC may generate the public key and the private key of the blockchain node according to Formulas 3 and 4.

$$y = H(id_{CA}) \qquad\qquad (3)$$

$$y = (sk)^e \bmod N \qquad\qquad (4)$$

Herein, $N = pq$, $P$ and $q$ are the trapdoor information obtained during KGC initialization, $1 < e < \varphi(N)$ and gcd(e, $\varphi$ (N)) = 1, gcd() represents a greatest common divisor, $\varphi(N) = (p-1)(q-1)$, $sk$ is the private key of the blockchain node, and $(y,e)$ is the public key of the blockchain node.

After generating the public key and the private key of the blockchain node, the KGC may directly use the private key and the public key of the blockchain node as the key information of the blockchain node.

Optionally, to ensure security of the private key of the blockchain node in a transmission process, the KGC and the blockchain node may agree on a channel encryption key when establishing communication. Based on this, the KGC may encrypt the private key of the blockchain node by using a channel encryption key agreed on in advance, to obtain first ciphertext, and then use the first ciphertext and the public key of the blockchain node as the key information of the blockchain node.

It should be noted that, in this implementation, after generating the key information of the blockchain node, the KGC may further disclose a second public parameter set, where the second public parameter set may include the hash function H used to generate the public key of the blockchain node in Formula 3 and the parameter $e$ used to generate the private key of the blockchain node in Formula 4.

Optionally, before the key information of the blockchain node is generated in any one of the foregoing implementations, the KGC may further verify security of the blockchain node based on the identifier of the blockchain node in the CA registration request. If verification succeeds, the KGC may determine that the CA registration request is valid, and generate the corresponding key information for the blockchain node. If the verification fails, the KGC may determine that the CA registration request is invalid, and end the operation or return registration failure response to the blockchain node. In this case, CA registration of the blockchain node fails, that is, the blockchain node cannot be registered as the CA node.

For example, the KGC may store a malicious CA node identifier set, and the set includes an identifier of a CA node that was once determined as a malicious CA node before a current moment. Based on this, after receiving the CA registration request, the KGC may query for whether the malicious CA node identifier set includes the identifier of the blockchain node. If the malicious CA node identifier set includes the identifier of the blockchain node, it indicates that the blockchain node was once determined as the malicious CA node. In this case, the security verification on the blockchain node fails. Therefore, it is determined that the CA registration request is invalid. If the malicious CA node identifier set does not include the identifier of the blockchain node, it indicates that the blockchain node was not once determined as the malicious CA node. In this case, the security verification on the blockchain node succeeds, it is determined that the CA registration request is valid, and the corresponding key information is generated for the blockchain node.

It should be noted that the malicious CA node identifier set may be implemented by using a Bloom filter. The Bloom filter may include a preset hash function and a binary vector. Each time a CA node is determined as the malicious CA node, an identifier of the CA node is first processed by using the preset hash function, to obtain a value, and then a bit corresponding to the value in the binary vector is set to 1. Therefore, an identifier of a malicious CA node is added to the Bloom filter, and the Bloom filter is the malicious CA node identifier set. Based on this, after receiving the CA registration request, the KGC may process the identifier of the blockchain node in the CA registration request by using the preset hash function, to obtain a first value. Then, whether a bit corresponding to the first value in the binary vector is 1 is queried for. If the bit corresponding to the first value is 1, it is determined that the malicious CA node identifier set includes the identifier of the blockchain node. If the bit corresponding to the first value in the binary vector is not 1, it is determined that the malicious CA node identifier set does not include the identifier of the blockchain node.

**Step 304:** The KGC sends the key information, and the blockchain node receives the key information.

After generating the key information for the blockchain node, the KGC may send the key information to the blockchain node.

In the first case, the key information includes the time validity key of the blockchain node. After receiving the key information, the blockchain node may generate the private key of the blockchain node based on the time validity key of the blockchain node and the first random number selected when the public key of the blockchain node is generated. For example, the private key of the blockchain node is $sk = (T, x)$, where $T$ is the time validity key of the blockchain node, and $x$ is the first random number.

It should be noted that, in this case, after sending the key information to the blockchain node, the KGC may further disclose time validity key information of the blockchain node, and the time validity key information includes the identifier and the time validity key of the blockchain node and the expiration time of the time validity key. Disclosing the time validity key information may mean that the KGC stores the time validity key information in the blockchain or another specified storage location, where the specified storage location is a storage location that is known to and can be accessed by the BCF node, the blockchain node, and the NF node.

In the second case, the key information is obtained based on the public key and the private key of the blockchain node. If the key information includes the public key and the private key of the blockchain node, the blockchain node may directly store the public key and the private key. If the key information includes the public key of the blockchain node and the first ciphertext, after receiving the key information, the blockchain node may decrypt the first ciphertext by using a channel decryption key, to obtain the private key of the blockchain node, and then store the private key and the public key.

After the blockchain node obtains the private key issued by the KGC or the public key and the private key issued by the KGC, the blockchain node is successfully registered as the CA node. Subsequently, the blockchain node may be used as the CA node to issue a digital certificate to the NF node.

In this embodiment of this application, the KGC may be deployed in the TCS, to implement strong protection on the master private key. Based on this, registration of the CA node is implemented via the KGC, to issue the key to the CA node, thereby improving security. In this embodiment of this application, the time validity key may be issued to the CA node to further flexibly revoke the malicious CA node, thereby improving the security.

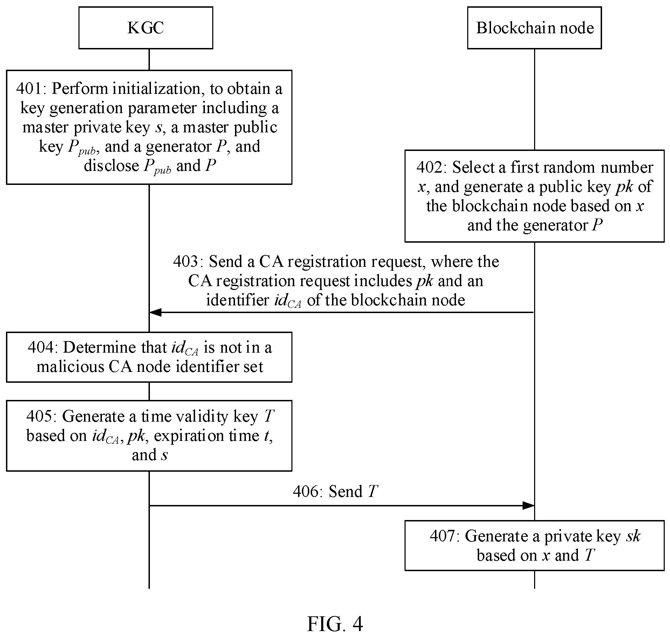

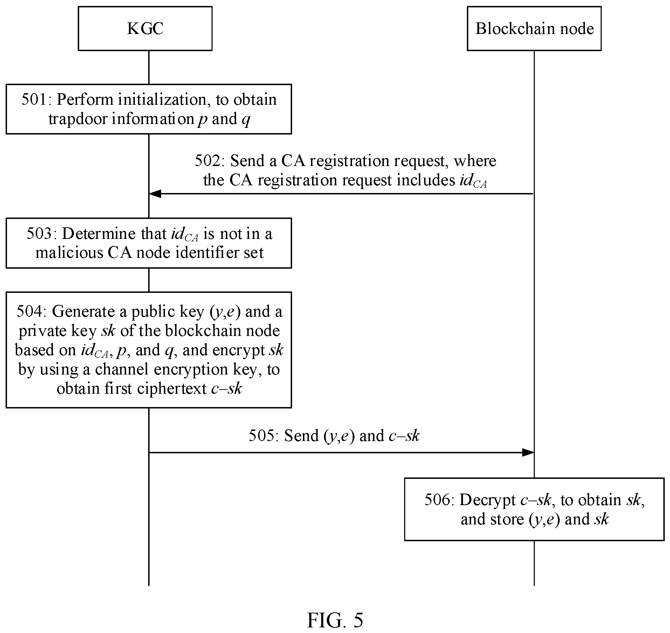

Based on the CA node registration method described in the foregoing embodiment, embodiments of this application provide the following two detailed CA node registration procedures in FIG. 4 and FIG. 5. First, FIG. 4 shows a detailed CA node registration procedure, including the following steps:

Step 401: A KGC performs initialization, to obtain a key generation parameter including a master private key $s$ , a master public key $P_{pub}$, and a generator $P$, and discloses $P_{pub}$ and $P$.

Step 402: A blockchain node selects a first random number $x$, and generates a public key $pk$ of the blockchain node based on $x$ and the generator P.

Step 403: The blockchain node sends a CA registration request to the KGC, where the CA registration request includes $pk$ and an identifier $id_{CA}$ of the blockchain node.

Step 404: The KGC determines that $id_{CA}$ is not in a malicious CA node identifier set.

Step 405: The KGC generates a time validity key $T$ based on $id_{CA}$, $pk$, expiration time $t$, and $s$.

Step 406: The KGC sends T to the blockchain node.

Step 407: The blockchain node generates a private key $sk$ based on $x$ and $T$.

For detailed implementations of step 401 to step 407, refer to related descriptions in the foregoing embodiment. Details are not described herein again in this embodiment of this application.

FIG. 5 shows another detailed CA node registration procedure according to an embodiment of this application. Refer to FIG. 5, the process includes the following steps:

Step 501: A KGC performs initialization, to obtain trapdoor information P and $q$.

Step 502: A blockchain node sends a CA registration request to the KGC, where the CA registration request carries an identifier $id_{CA}$ of the blockchain node.

Step 503: The KGC determines that $id_{CA}$ is not in a malicious CA node identifier set.

Step 504: The KGC generates a public key $(y,e)$ and a private key $sk$ of the blockchain node based on $id_{CA}$, $p$, and $q$, and encrypts $sk$ by using a channel encryption key, to obtain first ciphertext $c - sk$ .

Step 505: The KGC sends $(y,e)$ and $c$-$sk$ to the blockchain node.

Step 506: The blockchain node decrypts $c - sk$, to obtain $sk$, and stores $(y,e)$ and $sk$.

For detailed implementations of step 501 to step 506, refer to related descriptions in the foregoing embodiment. Details are not described herein again in this embodiment of this application.

Any blockchain node maintained by an operator in the blockchain system may be registered by using the method described in the foregoing embodiment, to become the CA node. Subsequently, these successfully registered CA nodes maintained by different operators or CA nodes in different types of networks maintained by a same operator may issue digital certificates to NF nodes in a same network domain or different network domains. The following describes in detail a digital certificate issuance process in the digital certificate management method provided in embodiments of this application.

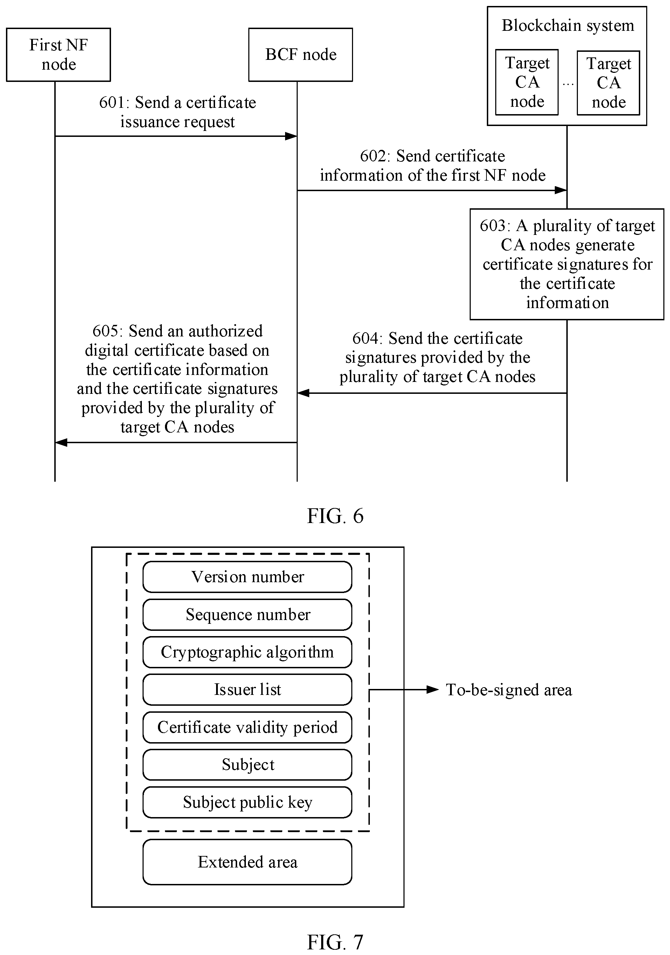

FIG. 6 is a flowchart of issuing a digital certificate according to an embodiment of this application. The method may be applied to the implementation environment shown in FIG. 1. The following uses an example in which a first NF node applies for a digital certificate for description. The first NF node may be any NF node. Refer to FIG. 6. The method includes the following steps.

Step 601: The first NF node sends a certificate issuance request to a BCF node, and the BCF node receives the certificate issuance request.

In this embodiment of this application, the first NF node may generate a public key and a private key of the first NF node by using a preset cryptographic algorithm, and store the public key and the private key of the first NF node.

When the first NF node needs to apply, based on a service requirement of the first NF node, to a plurality of CA nodes in different network domains for issuing the digital certificate, the first NF node may generate the certificate issuance request based on a network domain in which the first NF node applies for issuing the digital certificate or an identifier of a CA node in the network domain and an identifier and the public key of the first NF node, and sends the certificate issuance request to the BCF node. Different network domains may be different 5GCs maintained by different operators, or different network domains may be different types of 5GCs maintained by a same operator.

In addition, the certificate issuance request may include the identifier and the public key of the first NF node and CA node indication information. The identifier of the first NF node may be used to uniquely identify the first NF node. The CA node indication information may indicate a plurality of target CA nodes in a blockchain system, and the plurality of target CA nodes are nodes that issue the digital certificate to the first NF node. In addition, at least two of the plurality of target CA nodes belong to different network domains. For example, each of the plurality of target CA nodes is located in a different network domain, or some CA nodes are located in different network domains, and other CA nodes are located in a same network domain.

For example, the CA node indication information may be identifiers of the plurality of target CA nodes. After any blockchain node is registered as a CA node by using the method described in the foregoing embodiment, an identifier of the CA node and an identifier of a network domain to which the CA node belongs may be disclosed. In this way, the first NF node may obtain the identifiers of the plurality of target CA nodes in different network domains, and use the identifiers of the plurality of target CA nodes as the CA node indication information.

Optionally, the CA node indication information may alternatively be a plurality of network domain identifiers, each network domain identifier indicates one network domain, and a plurality of network domains indicated by the plurality of network domain identifiers are network domains in which the first NF node applies for issuing the digital certificate.

Optionally, if the KGC issues the key to the CA node in the first implementation in the foregoing embodiment, the certificate issuance request may further carry signature assistance data. The signature assistance data may be a random character string or a timestamp generated by the first NF node, and the signature assistance data is used in assisting the CA node in providing a certificate signature for the first NF node subsequently.

Optionally, in addition to the foregoing information, the certificate issuance request may further include other attestation data of the first NF node, for example, configuration data of the first NF node. Subsequently, the CA node may verify an identity of the first NF node based on the attestation data. In addition, the certificate issuance request may further include another information item used to generate the digital certificate, for example, may further include the preset cryptographic algorithm used by the first NF node to generate the public key of the first NF node.

Optionally, after generating the certificate issuance request, the first NF node may further sign a hash value of the certificate issuance request by using the private key of the first NF node, to obtain a first signature, and send the first signature and the certificate issuance request together to the BCF node, so that the CA node can subsequently verify the identity of the first NF node based on the first signature.

Alternatively, the certificate issuance request of the first NF node may further include third identity verification information. The third identity verification information may include a first character string randomly generated by the first NF node and a third signature obtained by signing a hash value of the first character string by using the private key of the first NF node, so that the CA node can subsequently verify the identity of the first NF node based on the third signature.

Optionally, in a possible implementation, the first NF node may alternatively generate an initial certificate issuance request, where the initial certificate issuance request may not include the CA node indication information. Then, the first NF node may send the initial certificate issuance request to an NRF node in a network in which the first NF node is located. The NRF node may add the CA node indication information to the initial certificate issuance request based on a preconfigured parameter, and then send, to the BCF node, the certificate issuance request to which the CA node indication information is added.

In this implementation, the initial certificate issuance request may also include third identity verification information. Alternatively, the first NF node may sign a hash value of the initial certificate issuance request by using the private key of the first NF node, to obtain a third signature, and send the third signature and the initial certificate issuance request together to the NRF node. Correspondingly, the NRF node may send, to the BCF node, the signature together with the certificate issuance request to which the CA node indication information is added.

**Step 602:** The BCF node sends certificate information of the first NF node to the plurality of target CA nodes in the blockchain system.

After receiving the certificate issuance request of the first NF node, the BCF node may generate an initial digital certificate of the first NF node based on the certificate issuance request, and then, send, based on the initial digital certificate, the certificate information of the first NF node to the plurality of target CA nodes indicated by the CA node indication information in the certificate issuance request.

For example, the BCF node may generate the initial digital certificate based on the certificate issuance request in a preset certificate format. The initial digital certificate may include a to-be-signed area and an extended area. The to-be-signed area is used to store the to-be-signed certificate information of the first NF node, and the extended area is used to store certificate signatures subsequently provided by the plurality of target CA nodes.

It should be noted that the certificate information may include the identifier and the public key of the first NF node and the identifiers of the plurality of target CA nodes obtained based on the CA node indication information that are carried in the certificate issuance request.

If the CA node indication information is the identifiers of the plurality of target CA nodes, the BCF node may directly obtain the identifiers of the plurality of target CA nodes. If the CA node indication information is the plurality of network domain identifiers, the BCF node may obtain identifiers of one or more CA nodes in the network domain indicated by each network domain identifier, and the obtained identifiers of the plurality of CA nodes in the plurality of network domains are the identifiers of the plurality of target CA nodes.

Optionally, the BCF node may further generate a certificate validity period of the first NF node according to a preset strategy. Correspondingly, the certificate information may further include the certificate validity period.

Optionally, the BCF node may further obtain time validity key information of the plurality of target CA nodes. Correspondingly, the certificate information may further include the time validity key information of the plurality of target CA nodes. Time validity key information of any target CA node may include an identifier and a time validity key of the target CA node and expiration time of the time validity key.

Optionally, the certificate information may further include another information item, for example, a version number or a sequence number.

FIG. 7 is a diagram of a format of a digital certificate according to an embodiment of this application. As shown in FIG. 7, the digital certificate includes a to-be-signed area and an extended area. The to-be-signed area may include certificate information such as a version number, a sequence number, a cryptographic algorithm, an issuer list, a certificate validity period, a subject, and a subject public key. In this embodiment of this application, the issuer list may include the identifiers of the plurality of target CA nodes that issue the digital certificate to the first NF node. The subject is a subject that applies for the digital certificate, namely, the identifier of the first NF node. The subject public key is the public key of the first NF node.

After generating the initial digital certificate, the BCF node may generate a certificate issuance transaction based on the certificate information included in the to-be-signed area of the initial digital certificate, where the certificate issuance transaction includes the certificate information of the first NF node. Then, the BCF node may send the certificate issuance transaction to the plurality of target CA nodes. The certificate issuance transaction is used to initiate, to the plurality of target CA nodes, a transaction for issuing the digital certificate. In this embodiment of this application, the transaction may be a message or data to be processed by using a smart contract in the blockchain system.

Optionally, if the certificate issuance request further carries the third identity verification information, the certificate issuance transaction may further include the third identity verification information.

Optionally, if the BCF node further receives a signature corresponding to the certificate issuance request when receiving the certificate issuance request of the first NF node, the BCF node may further use the certificate issuance request and the corresponding signature as first identity verification information, and adds the first identity verification information to the certificate issuance transaction. The signature corresponding to the certificate issuance request may be the first signature obtained by signing, by the first NF node, the complete certificate issuance request by using the private key of the first NF node, or may be the third signature obtained by signing, by the first NF node, the initial certificate issuance request by using the private key of the first NF node.

Optionally, when each CA node in the blockchain system is registered, if the KGC issues the key to the CA node in the first implementation in the foregoing embodiment, it can be learned from the foregoing descriptions that the certificate issuance request may carry the signature assistance data. In this case, the certificate issuance transaction includes the signature assistance data. Certainly, in some possible implementations, the certificate issuance request may alternatively not include the signature assistance data, but the BCF node generates the signature assistance data, and carries the signature assistance data in the certificate issuance transaction.

After generating the certificate issuance transaction, the BCF node may send the certificate issuance transaction to a blockchain node connected to the BCF node in the blockchain system, and then send the certificate issuance transaction to the plurality of target CA nodes via the blockchain node.

For example, after the blockchain node receives the certificate issuance transaction, if the certificate issuance transaction carries the first identity verification information, the blockchain node may obtain the public key of the first NF node in the certificate information carried in the certificate issuance transaction, and verify the signature in the first identity verification information by using the public key of the first NF node and the certificate issuance request included in the first identity verification information. If verification succeeds, it may be determined that a node to which the certificate information in the certificate issuance transaction belongs is a node that sends the certificate issuance request, that is, the certificate issuance transaction sent by the BCF node is valid. If the verification fails, it may be determined that the node to which the certificate information in the certificate issuance transaction belongs is inconsistent with the node that sends the certificate issuance request. Therefore, the certificate issuance transaction is invalid.

Optionally, if the certificate issuance transaction carries the third identity verification information, the blockchain node may also verify the signature in the third identity verification information by using the public key of the first NF node.

The identity verification information carried in the certificate issuance transaction is verified, so that it can be ensured that a subject of the certificate information is consistent with a subject that sends the certificate issuance request, thereby implementing transparent certificate issuance and improving security.

After determining that the certificate issuance transaction is valid, the blockchain node may obtain the identifiers of the plurality of target CA nodes in the certificate information included in the certificate issuance transaction, and simultaneously send the certificate issuance transaction to the plurality of target CA nodes based on the identifiers of the plurality of target CA nodes. Correspondingly, the plurality of target CA nodes may receive the certificate issuance transaction, and process the certificate issuance transaction in parallel.

Optionally, the blockchain node may alternatively send the certificate issuance transaction to one of the plurality of target CA nodes based on the identifiers of the plurality of target CA nodes. After receiving the certificate issuance transaction, the target CA node may process the certificate issuance transaction by using a method described in step 603, and return a processing result to the blockchain node after completing processing the certificate issuance transaction. Then, the blockchain node may send the certificate issuance transaction to a next target CA node. The same rule applies to the rest until the last target CA node completes processing the certificate issuance transaction and returns a certificate signature.

It should be noted that, after receiving the certificate issuance transaction, each target CA node may also verify, with reference to the method described above, whether the certificate issuance transaction is valid based on the first identity verification information or the third identity verification information carried in the certificate issuance transaction. If the verification succeeds, the target CA node may continue to process the certificate issuance transaction, that is, perform step 603. If the verification fails, the target CA node may end the operation.

In addition, in this embodiment of this application, after receiving the certificate issuance transaction, the blockchain node may invoke the smart contract, to send the certificate issuance transaction to the corresponding target CA nodes based on the identifiers of the plurality of target CA nodes in the certificate issuance transaction.

Optionally, in some possible cases, the BCF node may alternatively not send the certificate information, the identity verification information, and the signature assistance data by sending the certificate issuance transaction, but carry the foregoing information in a message of another type, and send the message to the plurality of target CA nodes via the connected blockchain node. Alternatively, the foregoing information may be carried in different messages, and the messages are separately sent to the plurality of target CA nodes via the connected blockchain node. This is not limited in embodiments of this application. The following mainly uses an example in which the certificate information is carried in the certificate issuance transaction to describe subsequent steps. For another possible implementation of sending the certificate information, and a subsequent implementation in which the node in the blockchain system performs an operation based on the foregoing information, refer to the following related descriptions. Details are not described in this embodiment of this application.

**Step 603:** The plurality of target CA nodes in the blockchain system generate the certificate signatures for the certificate information.

In the first implementation, when the blockchain node simultaneously sends the certificate issuance transaction to the plurality of target CA nodes, after receiving the certificate issuance transaction, the target CA node may invoke the smart contract to process the certificate issuance transaction, to sign the certificate information by using a private key of the target CA node, so as to obtain a certificate signature of the target CA node.

A first CA node in the plurality of target CA nodes is used as an example. The first CA node may sign the certificate information by using a private key of the first CA node, to obtain a first certificate signature. In this case, the first certificate signature is a certificate signature of the first CA node. Based on different algorithms used by the KGC to issue the key to the CA node, the first CA node may generate the first certificate signature in the following manner 1 or manner 2.

Manner 1: If the KGC issues the key to the CA node in the blockchain system in the first implementation in the foregoing embodiment, the certificate issuance transaction includes the signature assistance data. In this case, the first CA node may obtain the first public parameter set disclosed by the KGC and time validity key information of the first CA node, then sign the certificate information in the certificate issuance transaction by using the private key and the time validity key information of the first CA node, the first public parameter set, and the signature assistance data, to obtain the first certificate signature.

The first CA node may first randomly select a value $r$ from $Z_q^*$, and then the first CA node may obtain a part $R$ of the first certificate signature through calculation by using $r$ and the generator P included in the first public parameter set according to Formula 5.

$$R = rP \qquad (5)$$

In addition, the first CA node may further calculate a remaining part S of the first certificate signature by using the private key and the time validity key information of the first CA node, the first public parameter set, the signature assistance data, and the certificate information according to Formulas 6 to 9.

$$h = H_4\left(cert_{NF}, id_{CA}, pk, R, t, str\right) \quad (6)$$

$$F_1 = H_2(str) \quad (7)$$

$$F_2 = H_3(str) \quad (8)$$

$$S = T + xF_1 + hrF_2 \quad (9)$$

Herein, $H_2$, $H_3$, and $H_4$ are respectively the hash functions included in the first public parameter set described above, and $cert_{NF}$ is the certificate information carried in the certificate issuance transaction. $id_{CA}$ is an identifier of the first CA node, $pk$ is a public key of the first CA node, R is the part of signature calculated according to Formula 5, $t$ is expiration time that can be obtained from the time validity key information, $str$ is the signature assistance data, $T$ is a time validity key in the private key $sk = (T,x)$ of the first CA node, and $x$ is a random number in the private key $sk = (T,x)$ of the first CA node.

After separately generating R and S in the foregoing manner, the first CA node may obtain the first certificate signature $\sigma = (R,S)$ based on R and $S$.

Manner 2: If the KGC issues the key to the CA node in the blockchain system in the second implementation in the foregoing embodiment, the first CA node may obtain the second public parameter set disclosed by the KGC, and randomly select a value $k$ from $Z_q^*$. The second public parameter set includes the hash function H used to generate the public key of the CA node and the parameter $e$ used to generate the private key of the CA node. Then, the first CA node may obtain the two parts of signatures $a$ and $z$ by using the private key of the first CA node, the second public parameter set, and the certificate information according to Formulas 10 to 12, and obtain the first certificate signature $\sigma = (a,z)$ based on the two parts of signatures.

$$a = k^e \quad (10)$$

$$c = H\left(cert_{NF}\right) \quad (11)$$

$$z = k(sk)^c \quad (12)$$

Herein, $cert_{NF}$ is the certificate information carried in the certificate issuance transaction, and $sk$ is the private key of the first CA node.

Each of the plurality of target CA nodes may generate a signature for the certificate information in the certificate issuance transaction by using a private key of the target CA node with reference to the foregoing method.

In a second implementation, when the blockchain node sequentially sends the certificate issuance transaction to the plurality of target CA nodes, for example, the blockchain node first sends the certificate issuance transaction to a second CA node in the plurality of target CA nodes, the second CA node may invoke the smart contract to process the certificate issuance transaction, to generate a certificate signature for the certificate information in the certificate issuance transaction. In this case, the generated certificate signature is a certificate signature of the second CA node. Then, the second CA node may return the certificate signature of the second CA node to the blockchain node. After receiving the certificate signature of the second CA node, the blockchain node may send the certificate signature of the second CA node and the certificate issuance transaction to a next target CA node like a third CA node. The third CA node may continue to process the certificate issuance transaction, and return a processing result to the blockchain node. The same rule applies to the rest until the last target CA node completes processing the certificate issuance transaction and returns a processing result.

For an implementation process in which the second CA node signs the certificate information by using a private key of the second CA node, to obtain the certificate signature of the second CA node, refer to the implementation process in which the first CA node generates the first certificate signature described in the first implementation. Details are not described herein again in this embodiment of this application.

In addition, after receiving the certificate issuance transaction and the certificate signature of the second CA node, the third CA node may obtain a part of an aggregate certificate signature based on a private key of the third CA node, the certificate information, and the certificate signature of the second CA node.

The third CA node may first generate a signature of the third CA node for the certificate information with reference to the method described in the first implementation, namely, a certificate signature of the third CA node. Then, the third CA node may aggregate the certificate signature of the second CA node and the certificate signature of the third CA node, to obtain the part of the aggregate certificate signature.

For example, it is assumed that each target CA node generates the signature of the target CA node for the certificate information in the manner 1 in the first implementation, the certificate signature of the second CA node is $\sigma_2 = (R_2, S_2)$, and the certificate signature of the third CA node is $\sigma_3 = (R_3, S_3)$. In this case, the third CA node aggregates the two certificate signatures, and an obtained aggregate signature may be $(S_2 + S_3, R_2, R_3)$.

If each target CA node generates the signature of the target CA node for the certificate information in the manner 2 in the first implementation, the certificate signature of the second CA node is $\sigma_2 = (a_2, z_2)$, and the certificate signature of the third CA node is $\sigma_3 = (a_3, z_3)$, the third CA node aggregates the two certificate signatures, and an obtained part of the aggregate signature is $(a_2 a_3, z_2 z_3)$.

After obtaining the part of the aggregate certificate signature, the third CA node returns the generated part of the aggregate certificate signature to the blockchain node, so that the blockchain node can continue to send the certificate issuance transaction and the part of the aggregate certificate signature to a next target CA node. The same rule applies to the rest until the last target CA node, for example, the first CA node obtains a final aggregate certificate signature by aggregating the signature of the first CA node generated first for the certificate information and a part of the aggregate certificate signature received from other target CA nodes.

For example, when each target CA node generates the signature of the target CA node for the certificate information in the manner 1 in the first implementation, the aggregate certificate signature generated by the last target CA node, namely, the first CA node is $\sigma_{all} = (S_{all}, R_1, R_2 \cdots R_n)$. Herein, $\sigma_{all}$ is the aggregate certificate signature, $S_{all} = \sum_{i=1}^{n} S_i$, $n$ is a quantity of target CA nodes, and i is a sequence number of the target CA node.

Optionally, when each target CA node generates the signature of the target CA node for the certificate information in the manner 2 in the first implementation, the aggregate certificate signature generated by the last target CA node, namely, the first CA node is:

$$\sigma_{all} = \left(a_{all}, z_{all}\right) = \left(\prod_{i=1}^{n} a_i, \prod_{i=1}^{n} z_i\right)$$

It should be noted that, if the certificate issuance transaction includes the signature assistance data, when returning the certificate signature for the certificate information of the first NF node to the blockchain node, each target CA node may return the signature assistance data and the certificate signature together to the blockchain node, so that the blockchain node can identify, based on the signature assistance data, whether the certificate signature is a signature returned by the target CA node for the certificate issuance transaction.

Optionally, in some possible cases, after receiving the certificate issuance transaction, each target CA node other than the first CA node in the plurality of target CA nodes may generate the signature of the target CA node for the certificate information, and directly upload the signature of the target CA node for the certificate information to the blockchain node, so that the blockchain node can send the collected certificate signatures of the plurality of target CA nodes and the certificate issuance transaction together to the first CA node. In this way, after generating the signature of the first CA node for the certificate information, the first CA node may perform one-time aggregation on the certificate signature of the first CA node and the certificate signatures of the other target CA nodes with reference to the method described above, to obtain the aggregate certificate signature.

**Step 604:** The target CA nodes in the blockchain system send, to the BCF node, the certificate signatures provided by the plurality of target CA nodes.

It can be learned from the description in step 603 that the plurality of target CA nodes may respectively generate the certificate signatures of the plurality of target CA nodes for the certificate information in parallel in the first implementation. In this case, the plurality of target CA nodes in the blockchain system may send the certificate signatures of the plurality of target CA nodes to the BCF node, and correspondingly, the BCF node may receive the certificate signatures of the plurality of target CA nodes. In this case, the certificate signatures provided by the plurality of target CA nodes include the certificate signatures of the plurality of target CA nodes.

Each target CA node may send the certificate information and the certificate signature of the target CA node to a consensus node in the blockchain system for reaching a consensus. After the consensus is reached, the consensus node in the blockchain system may return, to the blockchain node that sends the certificate issuance transaction, a certificate issuance transaction receipt corresponding to each target CA node, where the certificate issuance transaction receipt includes the certificate signature of the corresponding target CA node. Then, the blockchain node may send the received certificate issuance transaction receipt to the BCF node.

Optionally, the certificate issuance transaction receipt may further include the certificate information of the first NF node.

Optionally, when the certificate issuance transaction sent by the BCF node for the certificate issuance request of the first NF node further includes the signature assistance data, the certificate issuance transaction receipt that corresponds to each target CA node and that is returned by the consensus node may also include the signature assistance data, to identify that the certificate signature of each target CA node included in the certificate issuance transaction receipt is obtained through calculation based on the signature assistance data and the certificate information of the first NF node, so that the BCF node can subsequently send an authorized digital certificate to the first NF node based on the certificate signature carrying the signature assistance data.

Optionally, when the plurality of target CA nodes sequentially process the certificate issuance transaction in the second implementation in step 603, the last target CA node may send the generated aggregate certificate signature to the BCF node. Correspondingly, the BCF node may receive the aggregate certificate signature. In this case, the certificate signatures provided by the plurality of target CA nodes are the aggregate certificate signature.

For example, if the last target CA node is the first CA node, the first CA node may send the certificate information and the aggregate certificate signature to the consensus node in the blockchain system for reaching a consensus. After the consensus is reached, the consensus node may return a certificate issuance transaction receipt to the blockchain node, where the certificate issuance transaction receipt includes the aggregate certificate signature. Then, the blockchain node may send the certificate issuance transaction receipt to the BCF node. Optionally, the certificate issuance transaction receipt may further include the certificate information of the first NF node.

**Step 605:** The BCF nodes sends the authorized digital certificate to the first NF node based on the certificate information and the certificate signatures provided by the plurality of target CA nodes.

After the BCF node receives the certificate signatures provided by the plurality of target CA nodes, if the certificate signatures provided by the plurality of target CA nodes include the certificate signatures of the plurality of target CA nodes, the BCF node may aggregate the certificate signatures of the plurality of target CA nodes, to obtain the aggregate certificate signature, then generate the authorized digital certificate based on the aggregate certificate signature and the certificate information, and send the authorized digital certificate to the first NF node.

It should be noted that, as described above, if the certificate issuance transaction receipt includes the signature assistance data, the BCF node may select, from the certificate issuance transaction receipts respectively corresponding to the plurality of target CA nodes, a plurality of certificate issuance transaction receipts including the signature assistance data carried in the certificate issuance transaction. In this case, the certificate signature in the selected certificate issuance transaction receipt is the certificate signature generated by the target CA node based on the signature assistance data in the certificate issuance transaction and the certificate information of the first NF node. Then, the BCF node aggregates the certificate signatures in the plurality of certificate issuance transaction receipts obtained through screening, to obtain the aggregate certificate signature.

If the certificate signatures provided by the plurality of target CA nodes are the aggregate certificate signature obtained by aggregating the certificate signatures of the plurality of target CA nodes, the BCF node may directly generate the authorized digital certificate based on the aggregate certificate signature and the certificate information, and send the authorized digital certificate to the first NF node.

It can be learned from the content described in step 602 that the BCF node generates the initial digital certificate based on the certificate issuance request of the first NF node, and the initial digital certificate includes the extended area and the to-be-signed area for storing the certificate information. Based on this, the BCF node may add the aggregate certificate signature to the extended area of the initial digital certificate, to obtain the authorized digital certificate.

Optionally, in a possible case, if the certificate signatures that are provided by the plurality of target CA nodes and that are received by the BCF node include the certificate signatures of the plurality of target CA nodes, the BCF node may alternatively directly add the certificate signatures of the plurality of target CA nodes to the extended area of the initial digital certificate, to obtain the authorized digital certificate.

Optionally, if the key issued by the KGC to each CA node is the time validity key, before generating the authorized digital certificate based on the certificate signatures provided by the plurality of target CA nodes, the BCF node may further verify the time validity key information of the plurality of target CA nodes. If verification succeeds, the authorized digital certificate is generated based on the certificate information and the certificate signatures provided by the plurality of target CA nodes. If the verification fails, it is determined that the certificate signatures provided by the plurality of target CA nodes are invalid.

The BCF node may obtain the time validity key information of the plurality of target CA nodes and the first public parameter set that are disclosed by the KGC. Then, for any target CA node, the BCF node may verify whether $E(T_i, P)$ is equal to $E(V_i, P_{pub})$, where E is the bilinear mapping in the first public parameter set, $T_i$ is a time validity key of a target CA node whose sequence number is i, $P$ is the generator in the first public parameter set, $V_i$ is a time validity intermediate parameter of the target CA node whose sequence number is i, $V_i = H_1(id_{CAi}, pk_i, t_i)$, and $P_{pub}$ is the master public key of the KGC in the first public parameter set. If $E(T_i, P)$ is equal to $E(V_i, P_{pub})$, it may be determined that verification on time validity key information of the target CA node whose sequence number is i succeeds, that is, the time validity key of the target CA node does not expire, and the target CA node is the valid CA node.

If verification on the time validity key information of the plurality of target CA nodes all succeeds, it indicates that the certificate signatures provided by the plurality of target CA nodes are valid. In this case, the BCF node performs the step of generating and sending the authorized digital certificate.

If verification on time validity key information of any target CA node fails, it is determined that the certificate signatures provided by the plurality of target CA nodes are invalid. In this case, the BCF node may return certificate issuance failure response to the first NF node, to notify the first NF node that the certificate fails to be issued this time.

The time validity key information of the target CA node is verified, so that identity validity of the target CA node can be ensured as much as possible, thereby improving trustworthiness and security of the certificate signature.

In this embodiment of this application, the BCF node may send the certificate information of the first NF node to the plurality of target CA nodes in different network domains in the blockchain system based on the CA node indication information in the certificate issuance request of the first NF node, the plurality of target CA nodes jointly provide the certificate signatures for the certificate information of the first NF node, and then the BCF node sends the authorized digital certificate to the first NF node based on the signatures, thereby implementing decentralized cross-domain certificate issuance. In addition, the plurality of CA nodes jointly provide the certificate signature for the digital certificate of the first NF node, thereby enhancing trustworthiness of the certificate.

In addition, in this embodiment of this application, the certificate signatures of the plurality of target CA nodes may be aggregated and then added to the digital certificate. This can reduce a size of the digital certificate, thereby reducing a data transmission amount during transmission of the digital certificate and a size of a storage space that needs to be occupied for storing the digital certificate.

It should be further noted that, in this embodiment of this application, before processing the certificate issuance transaction, the target CA node may verify, based on the first identity verification information or the third identity verification information carried in the certificate issuance transaction, whether the subject of the certificate information is the subject that sends the certificate issuance request, to implement transparent certificate issuance and improve security.

Based on the digital certificate management method described in the foregoing embodiment, the following uses an example in which the target CA node includes a CA 1 and a CA 2 to describe the digital certificate issuance process.

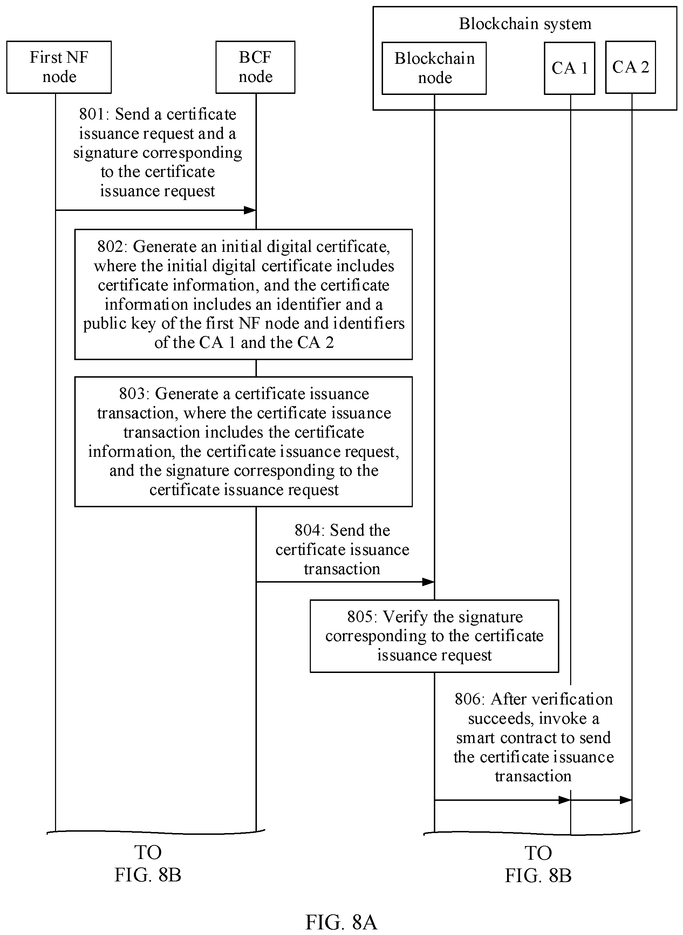

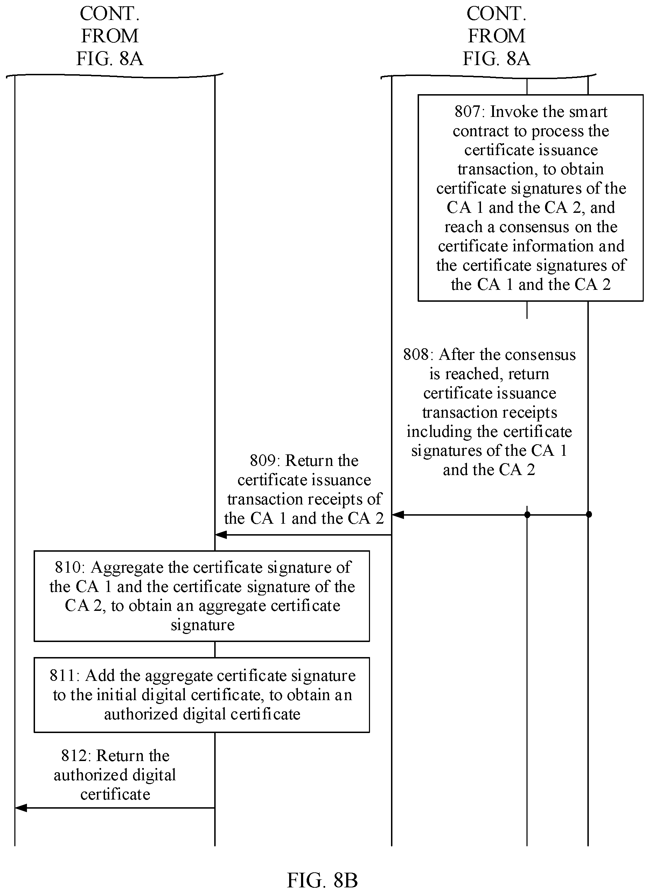

In a first example, refer to FIG. 8A and FIG. 8B. The process includes the following steps:

Step 801: A first NF node sends, to a BCF node, a certificate issuance request and a signature corresponding to the certificate issuance request.

Step 802: The BCF node generates an initial digital certificate, where the initial digital certificate includes certificate information, and the certificate information includes an identifier and a public key of the first NF node and identifiers of a CA 1 and a CA 2.

Step 803: The BCF node generates a certificate issuance transaction, where the certificate issuance transaction includes the certificate information, the certificate issuance request, and the signature corresponding to the certificate issuance request.

Step 804: The BCF node sends a certificate issuance transaction to a blockchain node.

Step 805: The blockchain node verifies the signature corresponding to the certificate issuance request.

Step 806: After verification succeeds, the blockchain node invokes a smart contract to send the certificate issuance transaction to the CA 1 and the CA 2.

Step 807: The CA 1 and the CA 2 separately invoke the smart contract to process the certificate issuance transaction, to obtain certificate signatures of the CA 1 and the CA 2, and reach a consensus on the certificate information and the certificate signatures of the CA 1 and the CA 2.

Step 808: After the consensus is reached, the CA 1 and the CA 2 return certificate issuance transaction receipts to the blockchain node, where the certificate issuance transaction receipts include the certificate signatures of the CA 1 and the CA 2.

Step 809: The blockchain node returns the certificate issuance transaction receipts of the CA 1 and the CA 2 to the BCF node.

Step 810: The BCF node aggregates the certificate signature of the CA 1 and the certificate signature of the CA 2, to obtain an aggregate certificate signature.

Step 811: The BCF node adds the aggregate certificate signature to the initial digital certificate, to obtain an authorized digital certificate.

Step 812: The BCF node returns the authorized digital certificate to the first NF node.

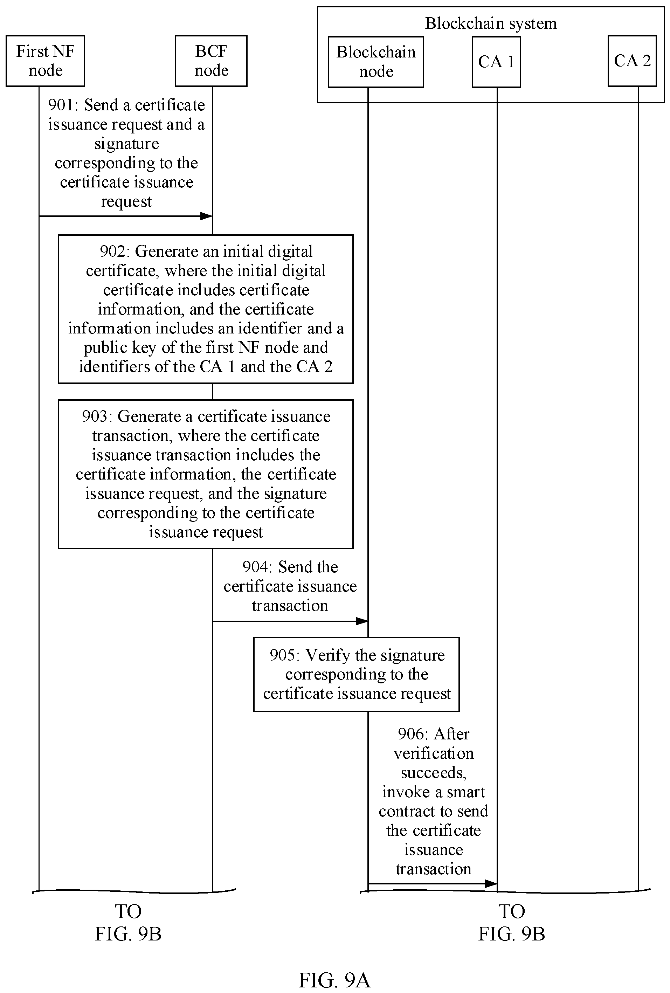

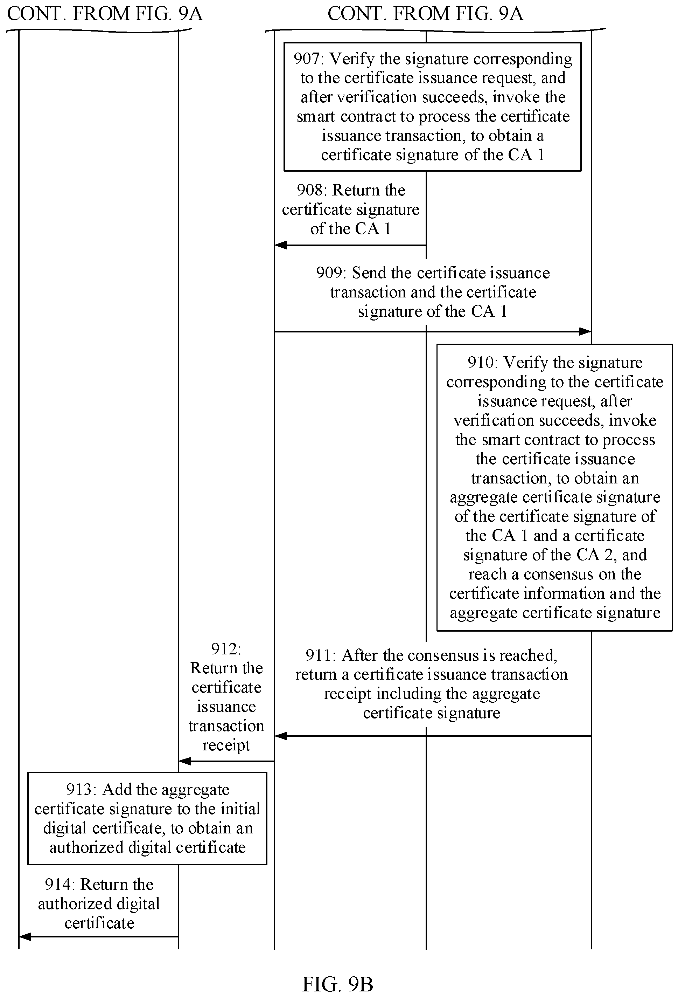

In a second example, refer to FIG. 9A and FIG. 9B. The digital certificate issuance process includes the following steps:

Step 901: A first NF node sends, to a BCF node, a certificate issuance request and a signature corresponding to the certificate issuance request.

Step 902: The BCF node generates an initial digital certificate, where the initial digital certificate includes certificate information, and the certificate information includes an identifier and a public key of the first NF node and identifiers of a CA 1 and a CA 2.

Step 903: The BCF node generates a certificate issuance transaction, where the certificate issuance transaction includes the certificate information, the certificate issuance request, and the signature corresponding to the certificate issuance request.

Step 904: The BCF node sends a certificate issuance transaction to a blockchain node.

Step 905: The blockchain node verifies the signature corresponding to the certificate issuance request.

Step 906: After verification succeeds, the blockchain node invokes a smart contract to send the certificate issuance transaction to the CA 1.

Step 907: The CA 1 verifies the signature corresponding to the certificate issuance request, and after verification succeeds, invokes the smart contract to process the certificate issuance transaction, to obtain a certificate signature of the CA 1.

Step 908: The CA 1 returns the certificate signature of the CA 1 to the blockchain node.

Step 909: The blockchain node sends the certificate issuance transaction and the certificate signature of the CA 1 to the CA 2.

Step 910: The CA 2 verifies the signature corresponding to the certificate issuance request, after verification succeeds, invokes the smart contract to process the certificate issuance transaction, to obtain an aggregate certificate signature of the certificate signature of the CA 1 and a certificate signature of the CA 2, and reaches a consensus on the certificate information and the aggregate certificate signature.

Step 911: After the consensus is reached, the CA 2 returns a certificate issuance transaction receipt to the blockchain node, where the certificate issuance transaction receipt includes the aggregate certificate signature.

Step 912: The blockchain node returns the certificate issuance transaction receipt to the BCF node.

Step 913: The BCF node adds the aggregate certificate signature to the initial digital certificate, to obtain an authorized digital certificate.

Step 914: The BCF node returns the authorized digital certificate to the first NF node.

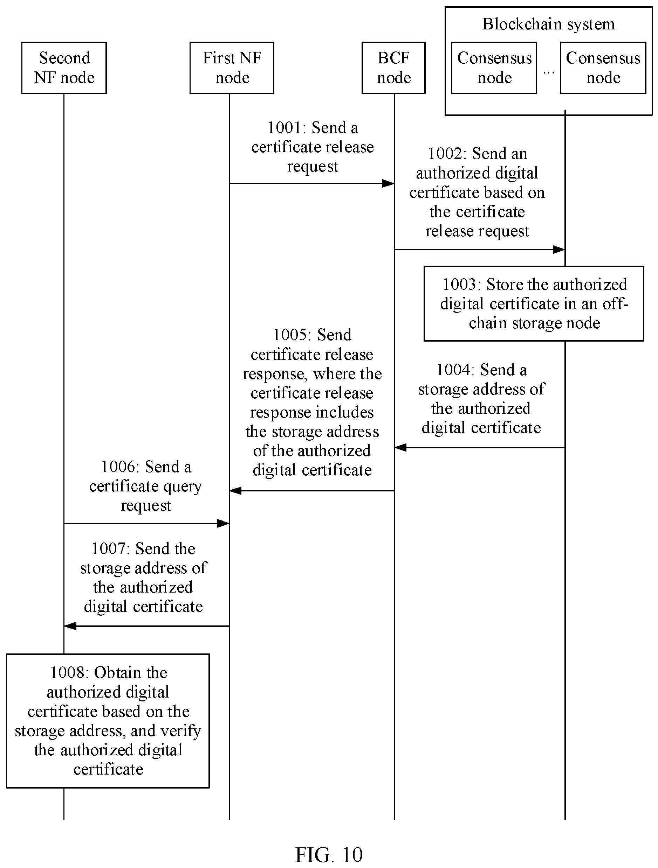

After issuing the authorized digital certificate to the first NF node by using the digital certificate issuance method described above, the first NF node may further release the authorized digital certificate by using a method described below. Refer to FIG. 10. A process of releasing an authorized digital certificate may include the following steps.

**Step 1001:** A first NF node sends a certificate release request to a BCF node.

After receiving an authorized digital certificate sent by the BCF node, the first NF node may release the authorized digital certificate via the BCF node and a blockchain system.

The first NF node may generate the certificate release request, where the certificate release request may carry the authorized digital certificate. Then, the first NF node may send the certificate release request to the BCF node.

Optionally, the first NF node may further sign a hash value of the certificate release request by using a private key of the first NF node, to obtain a second signature, and then, send the second signature and the certificate release request together to the BCF node.

**Step 1002:** The BCF node sends the authorized digital certificate to a consensus node in the blockchain system based on the certificate release request.

After receiving the certificate release request of the first NF node, the BCF node may generate a certificate release transaction based on the certificate release request, and send the certificate release transaction to the consensus node in the blockchain system. The certificate release transaction includes the authorized digital certificate, and is used to initiate, to the consensus node in the blockchain system, a transaction for releasing the authorized digital certificate.

Optionally, the BCF node may further send second identity verification information to the consensus node in the blockchain system, where the second identity verification information includes the certificate release request and the second signature. For example, the BCF node may carry the second identity verification information in the certificate release transaction, and send the certificate release transaction to the consensus node.

**Step 1003:** The consensus node in the blockchain system stores the authorized digital certificate in an off-chain storage node.

After receiving the certificate release transaction, each consensus node in the blockchain system may invoke a smart contract to process the certificate release transaction, to update the authorized digital certificate to the off-chain storage node.

Optionally, the consensus node may further obtain assistance verification data corresponding to the authorized digital certificate, and update the assistance verification data and the authorized digital certificate together to the off-chain storage node. The assistance verification data is used to assist in verifying the authorized digital certificate.

For example, if the KGC issues the key to the CA node in the first implementation in the foregoing embodiment, the assistance verification data may include the signature assistance data carried in the certificate issuance request of the first NF node or carried in the certificate issuance transaction generated based on the certificate issuance request, the public keys of the plurality of target CA nodes, the expiration time of the time validity keys, and the first public parameter set disclosed during KGC initialization.

If the KGC issues the key to the CA node in the second implementation in the foregoing embodiment, the assistance verification data may include the second public parameter set disclosed during KGC initialization. The second public parameter set includes the hash function $H$ used to generate the public key of the CA node and the parameter $e$ used to generate the private key of the CA node. Because the second public parameter set is public, the consensus node may not store the assistance verification data when storing the authorized digital certificate in the off-chain storage node.

Optionally, before processing the certificate release transaction, each consensus node may further verify an identity of the first NF node based on the second identity verification information.

The consensus node may obtain the public key of the first NF node carried in the authorized digital certificate, and verify the second signature by using the public key and the certificate release request in the second identity verification information. If verification on the second signature succeeds, it indicates that a node that releases the certificate is a node to which the authorized digital certificate belongs, that is, a certificate subject is consistent with a subject that releases the certificate. In this case, the consensus node may determine that the certificate release transaction is valid, and further process the certificate release transaction.

It can be learned that, in this embodiment of this application, whether the certificate subject is consistent with the subject that releases the certificate can be verified based on the second identity verification information, to avoid behavior of releasing the certificate by a non-certificate subject, thereby implementing transparent certificate release.

**Step 1004:** The consensus node in the blockchain system sends a storage address of the authorized digital certificate to the BCF node.

After invoking the smart contract to perform the certificate release transaction, the consensus node in the blockchain node may obtain the storage address of the authorized digital certificate or storage addresses of the authorized digital certificate and the assistance verification data. Then, each consensus node may reach a consensus on the storage address, and after the consensus is reached, return a certificate release transaction receipt to the BCF node, where the certificate release transaction receipt includes the storage address.

It should be noted that the authorized digital certificate and the assistance verification data may be stored in a continuous storage space. In this way, the storage addresses of the authorized digital certificate and the assistance verification data are the same. Alternatively, the authorized digital certificate and the assistance verification data may be stored in two discontinuous storage spaces. In this way, the storage addresses of the authorized digital certificate and the assistance verification data are different.

**Step 1005:** The BCF node sends certificate release response to the first NF node, where the certificate release response includes the storage address of the authorized digital certificate.

After receiving the certificate release response, the first NF node determines that the certificate is successfully released. When another NF node like a second NF node subsequently queries the first NF node for the authorized digital certificate, the first NF node may feed back the storage address of the authorized digital certificate to the second NF node, so that the second NF node obtains the authorized digital certificate based on the storage address, and further verifies the authorized digital certificate. For example, the second NF node may obtain and verify the authorized digital certificate of the first NF node by performing step 1006 to step 1008.

**Step 1006:** The second NF node sends a certificate query request to the first NF node.

In this embodiment of this application, the second NF node may access or invoke a service of the first NF node. In this process, the second NF node may send the certificate query request to the first NF node, where the certificate query request is used to request to query for the authorized digital certificate of the first NF node.

**Step 1007:** The first NF node sends the storage address of the authorized digital certificate to the second NF node.

After receiving the certificate query request of the second NF node, the first NF node may return the storage address of the authorized digital certificate to the second NF node. The storage address is the storage address that is of the authorized digital certificate of the first NF node in the off-chain storage node and that is returned by the consensus node in step 1004.

Optionally, it can be learned from the foregoing descriptions that the consensus node may store the authorized digital certificate and the assistance verification data together in the off-chain storage node. In this case, the first NF node may return the storage addresses of the authorized digital certificate and the assistance verification data to the second NF node.

**Step 1008:** The second NF node obtains the authorized digital certificate based on the storage address, and verifies the authorized digital certificate.

After receiving the storage address returned by the first NF node, the second NF node may read the authorized digital certificate of the first NF node from the off-chain storage node based on the storage address. Optionally, the assistance verification data may be further read.

In the first case, the KGC issues the key to the CA node in the first implementation in the foregoing embodiment. In this case, after obtaining the authorized digital certificate and the assistance verification data of the first NF node, the second NF node verifies, based on the assistance verification data and certificate information in the authorized digital certificate, whether Equation 13 is true. If Equation 13 is true, it indicates that the authorized digital certificate is valid and verification succeeds. If Equation 13 is false, it indicates that the authorized digital certificate is invalid and the verification fails.

$$E\left(S_{all}, P\right) = E\left(\sum_{i=1}^{n} V_i, P_{pub}\right) E\left(F_1, \sum_{i=1}^{n} pk_i\right) E\left(\sum_{i=1}^{n} h_i F_2, R_{all}\right) \quad (13)$$

Herein, $S_{all}$ is a part of an aggregate certificate signature $\sigma_{all} = (S_{all}, R_1, R_2 \cdots R_n)$ in the authorized digital certificate, $n$ is a quantity of target CA nodes, $i$ is a sequence number of the target CA node, $F_1$ and $F_2$ may be obtained through calculation by using a hash function and the signature assistance data in the assistance verification data according to Formulas 7 and 8 in the foregoing embodiment, $V_i$ is a time validity intermediate parameter of a target CA node whose sequence number is i, and can be obtained through calculation by using an identifier and a public key of the corresponding target CA node and expiration time according to Formula 1, $h_i$ may be obtained through calculation by using the identifier and the public key of the target CA node whose sequence number is i, corresponding $R_i$ in the aggregate certificate signature, the expiration time, the signature assistance data, and certificate information other than the aggregate certificate signature in the authorized digital certificate according to Formula 6, $R_{all} = \sum_{i=1}^{n} R_i$, $P$ is a generator in the first public parameter set, $P_{pub}$ is a master public key of the KGC, and E is a bilinear mapping in the first public parameter set, and $pk_i$ is the public key of the target CA node whose sequence number is i.

In the second case, the KGC issues the key to the CA node in the second implementation in the foregoing embodiment. In this case, after obtaining the authorized digital certificate and the assistance verification data of the first NF node, the second NF node may verify, based on the authorized digital certificate and the assistance verification data, whether Equation 14 is true. If Equation 14 is true, it indicates that the authorized digital certificate is valid and verification succeeds. If Equation 14 is false, it indicates that the authorized digital certificate is invalid and the verification fails.

$$\left(\prod_{i=1}^{n} z_i\right)^e = a_{all}\left(\prod_{i=1}^{n} y_i\right)^c \quad (14)$$

Herein, $\prod_{i=1}^{n} z_i$ is equal to $z_{all}$ in an aggregate certificate signature $\sigma_{all} = (a_{all}, z_{all})$ in the authorized digital

certificate, $y_i$ is obtained through calculation by using the identifier of the target CA node whose sequence number is i according to Formula 3, $c$ may be obtained through calculation by using the certificate information of the authorized digital certificate and the hash function H in the second public parameter set according to Formula 11, and $e$ is the parameter in the second public parameter set.

In this embodiment of this application, after releasing the digital certificate, the consensus node may return the corresponding storage address to the first NF node. In this way, when subsequently querying for the authorized digital certificate of the first NF node, the another NF node may read the authorized digital certificate based on the storage address without traversing the entire blockchain, thereby improving certificate query efficiency. Based on this, in this embodiment of this application, the certificate signature in the authorized digital certificate is the aggregate certificate signature of the plurality of CA nodes, and the aggregate certificate signature is obtained through an addition operation or a multiplication operation. Therefore, when the another NF node verifies the authorized digital certificate, verification complexity is low, calculation overheads are low, and a verification speed is fast. In conclusion, the technical solutions provided in embodiments of this application can implement fast verification of the digital certificate.

In addition, the consensus node in the blockchain system may verify, based on the second identity verification information, whether the certificate subject is consistent with the subject that releases the certificate, to avoid the behavior of releasing the certificate by the non-certificate subject, thereby implementing transparent certificate release.

The following describes digital certificate management apparatuses provided in embodiments of this application.

The following describes digital certificate management apparatuses provided in embodiments of this application.

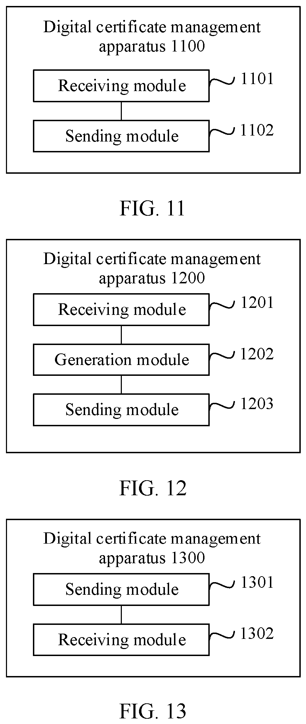

FIG. 11 is a diagram of a structure of a digital certificate management apparatus 1100 according to an embodiment of this application. The digital certificate management apparatus 1100 may be deployed in the BCF node described in the foregoing embodiment. Refer to FIG. 11. The digital certificate management apparatus 1100 includes:

a receiving module 1101, configured to: perform step 601 in the foregoing embodiment and receive certificate signatures provided by a plurality of target CA nodes; and
a sending module 1102, configured to perform steps 602 and 605 in the foregoing embodiment.

Optionally, the sending module 1102 is specifically configured to: generate an aggregate certificate signature based on the certificate signatures of the plurality of target CA nodes; generate an authorized digital certificate based on the aggregate certificate signature and certificate information, where the authorized digital certificate includes the certificate information and the aggregate certificate signature; and send the authorized digital certificate to a first NF node.

Optionally, the receiving module 1101 is specifically configured to receive the aggregate certificate signature provided by a first CA node in the plurality of target CA nodes, where the aggregate certificate signature is generated by the first CA node based on the certificate signatures of the plurality of target CA nodes, and the certificate signatures of the target CA nodes are obtained by signing the certificate information by using private keys of the target CA nodes.

Optionally, the sending module 1102 is specifically configured to: generate the authorized digital certificate based on the aggregate certificate signature and the certificate information, where the authorized digital certificate includes the certificate information and the aggregate certificate signature; and send the authorized digital certificate to the first NF node.

Optionally, the sending module 1102 is further configured to send first identity verification information to the plurality of target CA nodes, where the first identity verification information includes a certificate issuance request and a first signature, the first signature is obtained by signing a hash value of the certificate issuance request by using a private key of the first NF node, and the first identity verification information is used to verify whether a node to which the certificate information belongs is a node that sends the certificate issuance request.

Optionally, the apparatus 1100 is further configured to: obtain time validity key information of the plurality of target CA nodes, where the time validity key information includes identifiers and time validity keys of the target CA nodes and expiration time of the time validity keys, and the private keys of the target CA nodes include the time validity keys of the target CA nodes; verify the time validity key information of the plurality of target CA nodes; and if verification on the time validity key information of the plurality of target CA nodes succeeds, trigger the sending module 1102 to send the authorized digital certificate to the first NF node.

Optionally, the receiving module 1101 is further configured to receive a certificate release request of the first NF node; the sending module 1102 is further configured to send the authorized digital certificate to a consensus node in the blockchain system based on the certificate release request; the receiving module 1101 is further configured to receive a storage address that is of the authorized digital certificate and that is sent by the consensus node; and the sending module 1102 is further configured to send certificate release response to the first NF node, where the certificate release response includes the storage address of the authorized digital certificate.

Optionally, the sending module 1102 is further configured to send second identity verification information, where the second identity verification information includes the certificate release request and a second signature, the second signature is obtained by signing a hash value of the certificate release request by using the private key of the first NF node, and the second identity verification information is used to verify whether a node to which the authorized digital certificate belongs is a node that sends the certificate release request.

In this embodiment of this application, the BCF node may send the certificate information of the first NF node to the plurality of target CA nodes in different network domains in the blockchain system based on CA node indication information in the certificate issuance request of the first NF node, the plurality of target CA nodes jointly provide the certificate signatures for the certificate information of the first NF node, and then the BCF node sends the authorized digital certificate to the first NF node based on the certificate signatures provided by the plurality of target CA nodes, thereby implementing decentralized cross-domain certificate issuance.

FIG. 12 is a diagram of a structure of another digital certificate management apparatus 1200 according to an embodiment of this application. The digital certificate management apparatus 1200 may be deployed in the first CA node in the blockchain system described in the foregoing embodiment. Refer to FIG. 12. The digital certificate management apparatus 1200 includes:

a receiving module 1201, configured to receive certificate information of a first NF node from a BCF node, where the certificate information includes an identifier and a public key of the first NF node and identifiers of a plurality of target CA nodes;
a generation module 1202, configured to perform step 603 in the foregoing embodiment; and
a sending module 1203, configured to perform step 604 in the foregoing embodiment.

Optionally, the receiving module 1201 is further configured to receive first identity verification information from the BCF node, where the first identity verification information includes a certificate issuance request of the first NF node and a first signature, and the first signature is obtained by signing a hash value of the certificate issuance request by using a private key of the first NF node. The apparatus 1200 is further configured to: verify the first signature based on a public key of the first NF node and the certificate issuance request; and if verification on the first signature succeeds, trigger the generation module 1202 to generate a first certificate signature based on a private key of the first CA node and the certificate information.

Optionally, the generation module 1202 is specifically configured to: obtain a certificate signature of another CA node in the plurality of target CA nodes from the blockchain system, where the certificate signature of the another CA node is obtained by signing, by the another CA node, the certificate information by using a private key of the another CA node; sign the certificate information by using the private key of the first CA node, to obtain a certificate signature of the first CA node; and generate the first certificate signature based on the certificate signature of the first CA node and the certificate signature of the another CA node.

Optionally, the sending module 1203 is further configured to send a CA registration request to a KGC, where the CA registration request includes an identifier of the first CA node, and the KGC is deployed in a trustworthy cloud server; and the receiving module 1201 is further configured to receive key information that is of the first CA node and that is sent by the KGC, where the key information of the first CA node is generated based on the identifier of the first CA node, and the key information of the first CA node includes information about the private key of the first CA node.

Optionally, the key information of the first CA node includes a time validity key of the first CA node, and the time validity key is generated based on a public key and an identifier of the first CA node, expiration time of the time validity key, and a master private key of the KGC.

Optionally, the key information of the first CA node includes a public key of the first CA node and first ciphertext, the public key of the first CA node is generated based on the identifier of the first CA node, the first ciphertext is obtained by encrypting the private key of the first CA node by using a channel encryption key between the KGC and the first CA node, and the private key of the first CA node is generated based on the public key of the first CA node and trapdoor information of the KGC.

Optionally, the generation module 1202 is further configured to decrypt the first ciphertext based on a channel decryption key corresponding to the channel encryption key, to obtain the private key of the first CA node.

In this embodiment of this application, the plurality of target CA nodes in different network domains in the blockchain system may jointly provide the certificate signatures for the certificate information of the first NF node. In this way, the BCF node may send, to the first NF node, the authorized digital certificate including the certificate signatures provided by the plurality of target CA nodes, thereby implementing decentralized cross-domain certificate issuance.

FIG. 13 is a diagram of a structure of still another digital certificate management apparatus 1300 according to an embodiment of this application. The digital certificate management apparatus 1300 may be deployed in the first NF node described in the foregoing embodiment. The apparatus 1300 includes:

> a sending module 1301, configured to perform step 601 in the foregoing embodiment; and
> a receiving module 1302, configured to receive an authorized digital certificate sent by a BCF node, where the authorized digital certificate includes certificate signatures provided by a plurality of target CA nodes.

Optionally, the certificate signatures provided by the plurality of target CA nodes are an aggregate certificate signature generated based on the certificate signatures of the plurality of target CA nodes.

Optionally, the sending module 1301 is further configured to send a certificate release request to the BCF node; and the receiving module 1302 is further configured to receive certificate release response returned by the BCF node for the certificate release request, where the certificate release response is response returned after a consensus node in the blockchain system releases the authorized digital certificate based on the certificate release request, and the certificate release response includes a storage address of the authorized digital certificate.

Optionally, the sending module 1301 is further configured to send the storage address of the authorized digital certificate to a second NF node in response to a certificate query request of the second NF node, where the second NF node is configured to: obtain the authorized digital certificate based on the storage address of the authorized digital certificate, and verify the authorized digital certificate.

In this embodiment of this application, the first NF node may send the certificate issuance request to the BCF node, to obtain the certificate signatures jointly provided by the plurality of target CA nodes in different network domains in the blockchain system for certificate information of the first NF node, thereby implementing decentralized cross-domain certificate issuance.

It should be noted that division into the modules in the digital certificate management apparatuses provided in the foregoing embodiments is an example, is merely logical function division, and may be other division in an actual implementation. In addition, functional modules in embodiments of this application may be integrated into one processor, may exist alone physically, or two or more modules may be integrated into one module. The integrated module may be implemented in a form of hardware, or may be implemented in a form of a software functional module.

If the integrated module is implemented in a form of a software functional module and is sold or used as an independent product, the integrated module may be stored in a computer-readable storage medium. Based on such an understanding, the technical solutions in embodiments of this application essentially, or the part contributing to the conventional technology, or all or a part of the technical solutions may be implemented in a form of software product. The computer software product is stored in a storage medium and includes several instructions for instructing a network device (which may be a router or a switch) or a processor (processor) to perform all or a part of the steps of the methods described in embodiments of this application. The storage medium includes any medium that can store program code, for example, a USB flash drive, a removable hard disk, a read-only memory (read-only memory, ROM), a random access memory (random access memory, RAM), a magnetic disk, or an optical disc.

In addition, the digital certificate management apparatus provided in the foregoing embodiment belongs to a same concept as the digital certificate management method embodiment. For a specific implementation process of the digital certificate management apparatus, refer to the method embodiment. Details are not described herein again.

All or some of the foregoing embodiments may be implemented by software, hardware, firmware, or any combination thereof. When software is used to implement embodiments, all or a part of embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server or data center to another website, computer, server or data center in a wired (for example, a coaxial cable, an optical fiber, a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid-state drive (solid-state drive, SSD)), or the like.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment. In this application, "at least one" means one or more, and "a plurality of" means two or more. A term "and/or" describes an association relationship between associated objects, and indicates that three relationships may exist. For example, A and/or B may indicate the following three cases: A exists alone, both A and B exist, and B exists alone, where A and B may be singular or plural. In text descriptions of embodiments of this application, a character "/" usually indicates an "or" relationship between the associated objects. In this application, "first", "second", and various numbers are used for distinguishing for ease of description, and are not intended to limit the scope of embodiments of this application, for example, are used to distinguish between different messages but not to describe a specific order or sequence.

It may be understood that various numbers in embodiments of this application are merely used for distinguishing for ease of description, and are not intended to limit the scope of embodiments of this application. Sequence numbers of the foregoing processes do not mean an execution sequence, and the execution sequences of the processes should be determined based on functions and internal logic of the processes.

Finally, it should be noted that the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A digital certificate management method, applied to a blockchain function BCF node, wherein the method comprises:

   receiving a certificate issuance request of a first network function NF node, wherein the certificate issuance request comprises an identifier and a public key of the first NF node and certificate authority CA node indication information, the CA node indication information indicates a plurality of target CA nodes, the plurality of target CA nodes are nodes in a blockchain system, and at least two of the plurality of target CA nodes belong to different network domains;

sending certificate information of the first NF node to the plurality of target CA nodes, wherein the certificate information comprises the identifier and the public key of the first NF node and identifiers of the plurality of target CA nodes;

receiving certificate signatures provided by the plurality of target CA nodes, wherein the certificate signature is a signature of the certificate information; and

sending an authorized digital certificate to the first NF node based on the certificate information and the certificate signatures provided by the plurality of target CA nodes.

2. The method according to claim 1, wherein sending the authorized digital certificate to the first NF node based on the certificate information and the certificate signatures provided by the plurality of target CA nodes comprises:

generating an aggregate certificate signature based on the certificate signatures of the plurality of target CA nodes;

generating the authorized digital certificate based on the aggregate certificate signature and the certificate information, wherein the authorized digital certificate comprises the certificate information and the aggregate certificate signature; and

sending the authorized digital certificate to the first NF node.

3. The method according to claim 1, wherein receiving the certificate signatures provided by the plurality of target CA nodes comprises:

receiving an aggregate certificate signature provided by a first CA node in the plurality of target CA nodes, wherein the aggregate certificate signature is generated by the first CA node based on the certificate signatures of the plurality of target CA nodes.

4. The method according to claim 3, wherein sending the authorized digital certificate to the first NF node based on the certificate information and the certificate signatures provided by the plurality of target CA nodes comprises:

generating the authorized digital certificate based on the aggregate certificate signature and the certificate information, wherein the authorized digital certificate comprises the certificate information and the aggregate certificate signature; and

sending the authorized digital certificate to the first NF node.

5. The method according to any one of claims 1 to 4, further comprising:

sending first identity verification information to the plurality of target CA nodes, wherein the first identity verification information comprises the certificate issuance request and a first signature, the first signature is obtained by signing a hash value of the certificate issuance request by using a private key of the first NF node, and the first identity verification information is used to verify whether a node to which the certificate information belongs is a node that sends the certificate issuance request.

6. The method according to any one of claims 1 to 5, further comprising:

obtaining time validity key information of the plurality of target CA nodes, wherein the time validity key information comprises the identifiers and time validity keys of the target CA nodes and expiration time of the time validity keys, and private keys of the target CA nodes comprise the time validity keys of the target CA nodes;

verifying the time validity key information of the plurality of target CA nodes; and

if verification on the time validity key information of the plurality of target CA nodes succeeds, performing a step of sending the authorized digital certificate to the first NF node.

7. The method according to any one of claims 1 to 6, further comprising:

receiving a certificate release request of the first NF node;

sending the authorized digital certificate to a consensus node in the blockchain system based on the certificate release request;

receiving a storage address that is of the authorized digital certificate and that is sent by the consensus node; and

sending certificate release response to the first NF node, wherein the certificate release response comprises the storage address of the authorized digital certificate.

8. The method according to claim 7, further comprising:

sending second identity verification information to the consensus node, wherein the second identity verification information comprises the certificate release request and a second signature, the second signature is obtained by signing a hash value of the certificate release request by using the private key of the first NF node, and the second identity verification information is used to verify whether a node to which the authorized digital certificate belongs is a node that sends the certificate release request.

9. A digital certificate management method, applied to a first CA node in a plurality of target CA nodes in a blockchain system, wherein at least two of the plurality of target CA nodes belong to different network domains, and the method comprises:

receiving certificate information of a first network function NF node from a BCF node, wherein the certificate information comprises an identifier and a public key of the first NF node and identifiers of the plurality of target CA nodes;

generating a first certificate signature based on a private key of the first CA node and the certificate information; and

sending the first certificate signature to the BCF node, wherein the BCF node is configured to send an authorized digital certificate to the first NF node based on the first certificate signature and the certificate information, wherein the authorized digital certificate comprises certificate signatures provided by the plurality of target CA nodes.

10. The method according to claim 9, further comprising:

receiving first identity verification information from the BCF node, wherein the first identity verification information comprises a certificate issuance request of the first NF node and a first signature, and the first signature is obtained by signing a hash value of the certificate issuance request by using a private key of the first NF node; and

before generating the first certificate signature based on the private key of the first CA node and the certificate information, the method further comprises:

verifying the first signature based on the public key of the first NF node and the certificate issuance request; and

if verification on the first signature succeeds, performing a step of generating the first certificate signature based on the private key of the first CA node and the certificate information.

11. The method according to claim 9 or 10, wherein generating the first certificate signature based on the private key of the first CA node and the certificate information comprises:

obtaining a certificate signature of another CA node in the plurality of target CA nodes from the blockchain system, wherein the certificate signature of the another CA node is obtained by signing, by the another CA node, the certificate information by using a private key of the another CA node;

signing the certificate information by using the private key of the first CA node, to obtain a certificate signature of the first CA node; and

generating the first certificate signature based on the certificate signature of the first CA node and the certificate signature of the another CA node.

12. The method according to claim 11, further comprising:

sending a CA registration request to a key generation center KGC, wherein the CA registration request comprises an identifier of the first CA node, and the KGC is deployed in a trustworthy cloud server; and

receiving key information that is of the first CA node and that is sent by the KGC, wherein the key information of the first CA node is generated based on the identifier of the first CA node, and the key information of the first CA node comprises information about the private key of the first CA node.

13. The method according to claim 12, wherein the key information of the first CA node comprises a time validity key of the first CA node, and the time validity key is generated based on a public key and an identifier of the first CA node, expiration time of the time validity key, and a master private key of the KGC.

14. The method according to claim 12, wherein the key information of the first CA node comprises a public key of the first CA node and first ciphertext, the public key of the first CA node is generated based on the identifier of the first CA node, the first ciphertext is obtained by encrypting the private key of the first CA node by using a channel encryption key between the KGC and the first CA node, and the private key of the first CA node is generated based on the public key of the first CA node and trapdoor information of the KGC.

15. A digital certificate management method, applied to a first NF node, wherein the method further comprises:

sending a certificate issuance request to a BCF node, wherein the certificate issuance request comprises an identifier and a public key of the first NF node and CA node indication information, the CA node indication information indicates a plurality of target CA nodes, the plurality of target CA nodes are nodes in a blockchain system, and at least two of the plurality of target CA nodes belong to different network domains; and
receiving an authorized digital certificate sent by the BCF node, wherein the authorized digital certificate comprises certificate signatures provided by the plurality of target CA nodes.

16. The method according to claim 15, wherein the certificate signatures provided by the plurality of target CA nodes are an aggregate certificate signature generated based on the certificate signatures of the plurality of target CA nodes.

17. The method according to claim 15 or 16, wherein the method further comprises:

sending a certificate release request to the BCF node; and
receiving certificate release response returned by the BCF node for the certificate release request, wherein the certificate release response is response returned after a consensus node in the blockchain system releases the authorized digital certificate based on the certificate release request, and the certificate release response comprises a storage address of the authorized digital certificate.

18. The method according to claim 17, wherein the method further comprises:
sending the storage address of the authorized digital certificate to a second NF node in response to a certificate query request of the second NF node, wherein the second NF node is configured to: obtain the authorized digital certificate based on the storage address of the authorized digital certificate, and verify the authorized digital certificate.

19. A digital certificate management apparatus, wherein the apparatus comprises at least one module, and the at least one module is configured to perform the digital certificate management method according to any one of claims 1 to 8, claims 9 to 14, or claims 15 to 18.

20. A computer device, wherein the computer device comprises a processor, and the processor is configured to execute at least one program instruction or code stored in a memory, to implement the digital certificate management method according to any one of claims 1 to 8, claims 9 to 14, or claims 15 to 18.

21. A computer-readable storage medium, wherein the computer-readable storage medium stores instructions, and when the instructions are run on a computer device, the computer device is enabled to perform the digital certificate management method according to any one of claims 1 to 8, claims 9 to 14, or claims 15 to 18.

FIG. 1

EP 4 773 544 A1

201                205

Processor                Processor

CPU 0                CPU 0

CPU 1                CPU 1

203

Communication
bus         202

Memory

204          206          207

Communication
interface

Output
device

Input device

FIG. 2

KGC

Blockchain node

301: Generate a key generation
parameter

302: Send a CA registration request, where
the CA registration request includes an
identifier of the blockchain node

303: Generate key information
of the blockchain node based on
the identifier of the blockchain
node

304: Send the key information

FIG. 3

KGC

Blockchain node

401: Perform initialization, to obtain a key generation parameter including a master private key $s$, a master public key $P_{pub}$, and a generator $P$, and disclose $P_{pub}$ and $P$

402: Select a first random number $x$, and generate a public key $pk$ of the blockchain node based on $x$ and the generator $P$

403: Send a CA registration request, where the CA registration request includes $pk$ and an identifier $id_{CA}$ of the blockchain node

404: Determine that $id_{CA}$ is not in a malicious CA node identifier set

405: Generate a time validity key $T$ based on $id_{CA}$, $pk$, expiration time $t$, and $s$

406: Send $T$

407: Generate a private key $sk$ based on $x$ and $T$

FIG. 4

```
┌─────────────┐                                    ┌──────────────────┐
│     KGC     │                                    │ Blockchain node  │
└─────────────┘                                    └──────────────────┘
       │                                                    │
┌──────────────────────────────────┐                       │
│ 501: Perform initialization, to obtain │                  │
│ trapdoor information p and q       │                       │
└──────────────────────────────────┘                       │
       │                                                    │
       │    502: Send a CA registration request, where      │
       │      the CA registration request includes idCA      │
       │◄───────────────────────────────────────────────────│
       │                                                    │
┌──────────────────────────────────┐                       │
│ 503: Determine that idCA is not in a │                     │
│ malicious CA node identifier set   │                       │
└──────────────────────────────────┘                       │
       │                                                    │
┌──────────────────────────────────┐                       │
│ 504: Generate a public key (y,e) and a │                  │
│ private key sk of the blockchain node  │                  │
│ based on idCA, p, and q, and encrypt sk │                 │
│ by using a channel encryption key, to   │                 │
│ obtain first ciphertext c–sk           │                  │
└──────────────────────────────────┘                       │
       │                                                    │
       │         505: Send (y,e) and c–sk                    │
       │───────────────────────────────────────────────────►│
       │                                                    │
       │                           ┌────────────────────────────────┐
       │                           │ 506: Decrypt c–sk, to obtain sk, │
       │                           │ and store (y,e) and sk          │
       │                           └────────────────────────────────┘
       │                                                    │
```

FIG. 5

First NF node

BCF node

Blockchain system

Target CA node ... Target CA node

601: Send a certificate issuance request

602: Send certificate information of the first NF node

603: A plurality of target CA nodes generate certificate signatures for the certificate information

605: Send an authorized digital certificate based on the certificate information and the certificate signatures provided by the plurality of target CA nodes

604: Send the certificate signatures provided by the plurality of target CA nodes

FIG. 6

Version number

Sequence number

Cryptographic algorithm

Issuer list → To-be-signed area

Certificate validity period

Subject

Subject public key

Extended area

FIG. 7

First NF node

BCF node

Blockchain system

Blockchain node

CA 1

CA 2

801: Send a certificate issuance request and a signature corresponding to the certificate issuance request

802: Generate an initial digital certificate, where the initial digital certificate includes certificate information, and the certificate information includes an identifier and a public key of the first NF node and identifiers of the CA 1 and the CA 2

803: Generate a certificate issuance transaction, where the certificate issuance transaction includes the certificate information, the certificate issuance request, and the signature corresponding to the certificate issuance request

804: Send the certificate issuance transaction

805: Verify the signature corresponding to the certificate issuance request

806: After verification succeeds, invoke a smart contract to send the certificate issuance transaction

TO
FIG. 8B

TO
FIG. 8B

FIG. 8A

CONT.
FROM
FIG. 8A

CONT.
FROM
FIG. 8A

807: Invoke the smart contract to process the certificate issuance transaction, to obtain certificate signatures of the CA 1 and the CA 2, and reach a consensus on the certificate information and the certificate signatures of the CA 1 and the CA 2

808: After the consensus is reached, return certificate issuance transaction receipts including the certificate signatures of the CA 1 and the CA 2

809: Return the certificate issuance transaction receipts of the CA 1 and the CA 2

810: Aggregate the certificate signature of the CA 1 and the certificate signature of the CA 2, to obtain an aggregate certificate signature

811: Add the aggregate certificate signature to the initial digital certificate, to obtain an authorized digital certificate

812: Return the authorized digital certificate

FIG. 8B

Blockchain system

| First NF node | BCF node | Blockchain node | CA 1 | CA 2 |

901: Send a certificate issuance request and a signature corresponding to the certificate issuance request

902: Generate an initial digital certificate, where the initial digital certificate includes certificate information, and the certificate information includes an identifier and a public key of the first NF node and identifiers of the CA 1 and the CA 2

903: Generate a certificate issuance transaction, where the certificate issuance transaction includes the certificate information, the certificate issuance request, and the signature corresponding to the certificate issuance request

904: Send the certificate issuance transaction

905: Verify the signature corresponding to the certificate issuance request

906: After verification succeeds, invoke a smart contract to send the certificate issuance transaction

TO
FIG. 9B

TO
FIG. 9B

FIG. 9A

CONT. FROM FIG. 9A          CONT. FROM FIG. 9A

907: Verify the signature corresponding to the certificate issuance request, and after verification succeeds, invoke the smart contract to process the certificate issuance transaction, to obtain a certificate signature of the CA 1

908: Return the certificate signature of the CA 1

909: Send the certificate issuance transaction and the certificate signature of the CA 1

910: Verify the signature corresponding to the certificate issuance request, after verification succeeds, invoke the smart contract to process the certificate issuance transaction, to obtain an aggregate certificate signature of the certificate signature of the CA 1 and a certificate signature of the CA 2, and reach a consensus on the certificate information and the aggregate certificate signature

912: Return the certificate issuance transaction receipt

911: After the consensus is reached, return a certificate issuance transaction receipt including the aggregate certificate signature

913: Add the aggregate certificate signature to the initial digital certificate, to obtain an authorized digital certificate

914: Return the authorized digital certificate

FIG. 9B

FIG. 10

Digital certificate management
apparatus 1100

| Receiving module | ∿ 1101 |

| Sending module | ∿ 1102 |

FIG. 11

Digital certificate management
apparatus 1200

| Receiving module | ∿ 1201 |

| Generation module | ∿ 1202 |

| Sending module | ∿ 1203 |

FIG. 12

Digital certificate management
apparatus 1300

| Sending module | ∿ 1301 |

| Receiving module | ∿ 1302 |

FIG. 13

## INTERNATIONAL SEARCH REPORT

| International application No. |
|---|
| **PCT/CN2024/093967** |

| A. | CLASSIFICATION OF SUBJECT MATTER |
|---|---|

H04L 9/32(2006.01)i

According to International Patent Classification (IPC) or to both national classification and IPC

| B. | FIELDS SEARCHED |
|---|---|

Minimum documentation searched (classification system followed by classification symbols)

IPC:H04W,H04L,H04B

Documentation searched other than minimum documentation to the extent that such documents are included in the fields searched

Electronic data base consulted during the international search (name of data base and, where practicable, search terms used)

VEN, DWPI, ENTXT, CNTXT, ENTXTC: 比特币, 产生, 创建, 建立, 请求, 区块链, 区域链, 申请, 生成, 数字货币, 私有链, 指令, 密钥, 指示, 需求, 证书, application, blockchain, Certificate, create, establish, generate, produce, request, block-chain

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | WO 2019157970 A1 (BEIJING DIDI INFINITY TECHNOLOGY AND DEVELOPMENT CO., LTD.) 22 August 2019 (2019-08-22) description, paragraph [0003]-paragraph [0016], paragraph [0027]-paragraph [0050], and paragraph [0080]-paragraph [0102] | 1-21 |
| Y | US 2019036682 A1 (ALIBABA GROUP HOLDING LIMITED) 31 January 2019 (2019-01-31) description, paragraph [0044]-paragraph [0070] | 1-21 |
| A | GB 202217489 D0 (NCHAIN LICENSING AG) 04 January 2023 (2023-01-04) entire document | 1-21 |
| A | US 2021083882 A1 (CISCO TECHNOLOGY, INC.) 18 March 2021 (2021-03-18) entire document | 1-21 |
| A | US 2021119778 A1 (WEALEDGER NETWORK TECHNOLOGIES CO., LTD.) 22 April 2021 (2021-04-22) entire document | 1-21 |

☑ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **15 August 2024** | **21 August 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| | International application No. |
|---|---|
| | **PCT/CN2024/093967** |

**C.    DOCUMENTS CONSIDERED TO BE RELEVANT**

| Category* | Citation of document, with indication, where appropriate, of the relevant passages | Relevant to claim No. |
|---|---|---|
| A | US 2021250181 A1 (INTERNATIONAL BUSINESS MACHINES CORP.) 12 August 2021 (2021-08-12)<br>entire document | 1-21 |

Form PCT/ISA/210 (second sheet) (July 2022)

## INTERNATIONAL SEARCH REPORT
### Information on patent family members

International application No.

**PCT/CN2024/093967**

| Patent document cited in search report | | | Publication date (day/month/year) | Patent family member(s) | | | Publication date (day/month/year) |
|---|---|---|---|---|---|---|---|
| WO | 2019157970 | A1 | 22 August 2019 | CN | 110163641 | A | 23 August 2019 |
| US | 2019036682 | A1 | 31 January 2019 | US | 2020136806 | A1 | 30 April 2020 |
| | | | | TW | 201911099 | A | 16 March 2019 |
| | | | | SG | 11201906836 | RA | 27 August 2019 |
| | | | | WO | 2019023475 | A1 | 31 January 2019 |
| | | | | JP | 2020519039 | A | 25 June 2020 |
| | | | | KR | 20190099054 | A | 23 August 2019 |
| | | | | PH | 12019501743 | A1 | 15 June 2020 |
| | | | | US | 2021110063 | A1 | 15 April 2021 |
| | | | | EP | 3602388 | A1 | 05 February 2020 |
| | | | | CN | 107592292 | A | 16 January 2018 |
| | | | | HK | 1249292 | A0 | 26 October 2018 |
| | | | | IN | 201947030219 | A | 31 January 2020 |
| | | | | VN | 70129 | A | 25 May 2020 |
| GB | 202217489 | D0 | 04 January 2023 | GB | 2624643 | A | 29 May 2024 |
| | | | | WO | 2024110170 | A1 | 30 May 2024 |
| US | 2021083882 | A1 | 18 March 2021 | None | | | |
| US | 2021119778 | A1 | 22 April 2021 | WO | 2019242340 | A1 | 26 December 2019 |
| | | | | CN | 109033832 | A | 18 December 2018 |
| US | 2021250181 | A1 | 12 August 2021 | None | | | |

Form PCT/ISA/210 (patent family annex) (July 2022)

**EP 4 773 544 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311230568